# EUROPÄISCHE PATENTSCHRIFT

(11) **EP 0 980 207 B1**
(45) Veröffentlichungstag und Bekanntmachung des Hinweises auf die Patenterteilung: **12.03.2003**
(21) Anmeldenummer: 98918963.4
(22) Anmeldetag: 11.05.1998
(51) Int. Cl.: A21B 5/02

(54) **BACKOFEN FÜR DIE HERSTELLUNG VON DÜNNWANDIGEN FORMKÖRPERN MIT JEWEILS AUS ZWEI FORMHÄLFTEN BESTEHENDEN, AUF- UND ZUMACHBAREN BACKFORMEN**
BAKING OVEN FOR PRODUCING THIN-WALLED SHAPED PRODUCTS WITH BAKING MOULDS EACH CONSISTING OF TWO HALF MOULDS WHICH OPEN AND CLOSE
FOUR POUR LA PRODUCTION DE CORPS MOULES A PAROI MINCE AVEC DES MOULES DE CUISSON OUVRANTS ET FERMANTS CONSTITUES DE DEUX DEMI-MOULES

(30) Priorität: 09.05.1997 AT 78997
(43) Veröffentlichungstag der Anmeldung: 23.02.2000
(73) Patentinhaber: Franz Haas Waffelmaschinen- Industrie Aktiengesellschaft, 1210 Wien (AT)
(72) Erfinder: HAAS, Franz, sen, A-1210 Wien (AT); HAAS, Johann, A-3400 Klosterneuburg (AT); SACHSENHOFER, Johann, A-1220 Wien (AT)
(74) Vertreter: Puchberger, Rolf
(86) Internationale Anmeldenummer: AT9800122
(87) Internationale Veröffentlichungsnummer: WO98051157

(56) Entgegenhaltungen:
- WO-A-95/26635
- DE-C- 714 019

## Beschreibung

### Technisches Gebiet:

Die Erfindung bezieht sich auf Backöfen, durch die jeweils aus zwei Formhälften bestehende, auf- und zumachbare Backformen transportiert werden, in die im geöffneten Zustand Vorprodukte eingebracht werden, die in den geschlossenen Backformen in dünnwandige Formkörper umgewandelt werden, die in ihrer Gestalt jeweils dem von den beiden Formhälften einer geschlossenen Backform begrenzten Formhohlraum entsprechen.

Als Vorprodukte können formlose Massen eingesetzt werden, die sich in den geschlossenen Formen zu dünnwandigen Formkörpern verfestigen, oder formlose Backmassen, die in den geschlossenen Formen zu dünnwandigen Formkörpern gebacken werden. Als formlose Backmassen können für den menschlichen Genuß bestimmte Teige eingesetzt werden, beispielsweise zuckerfreie oder Zucker enthaltende Waffelteige, die in den Formen, je nach Teigrezeptur, zu knusprigen spröden Waffeln oder zu weichen Waffeln gebacken werden, oder andere bei der Herstellung von Süßwaren oder nicht süssen Backwaren verwendete Backteige. Als formlose Backmassen können auch für den menschlichen Genuß ungeeignete, auf Stärkebasis hergestellte Backmassen eingesetzt werden, die in den Formen zu verrottbaren Verpackungstassen oder zu anderen verrottbaren, Stärke enthaltenden Verpackungsprodukten gebacken werden.

Als Vorprodukte können auch in die herzustellenden dünnwandigen Formkörper zu integrierende, vorgeformte Formkörper eingesetzt werden, die zusammen mit einer formlosen Masse in die Formen eingebracht werden, oder vorgeformte Formkörper, die in den geschlossenen Formen eine neue Gestalt erhalten. Die vorgeformten Formkörper können selbst dünnwandige Formkörper sein, die aus formlosen Massen hergestellt wurden.

### Stand der Technik:

Bei bekannten langgestreckten Backöfen für die Herstellung von dünnwandigen Formkörpern aus formlosen Massen sind die auf- und zumachbaren Backformen zur Herstellung der Formkörper in 18 bis 140 auf- und zumachbaren Backzangen enthalten, wobei jede Backform mit ihren beiden Formhälften in den beiden Zangenhälften einer Backzange aufgenommen ist. Die Backzangen sind zu einer endlosen Kette zusammengeschlossen, die den Vorkopf und den anschließenden Backraum des jeweiligen Backofens kontinuierlich in einer Richtung durchläuft. Beim Passieren des Vorkopfes werden die Backzangen zum Öffnen ihrer Backformen geöffnet, um zuerst den jeweiligen dünnwandigen Formkörper aus den geöffneten Backform zu entnehmen und dann eine dosierte Menge der formlosen Masse in die geöffnete Backform einzubringen. Anschließend werden die Backzangen zum Schließen ihrer Backformen wieder geschlossen. Beim anschließenden Durchlaufen des Backraumes werden die Backformen beheizt und die in den geschlossenen Backformen eingeschlossenen, formlosen Massen zu dünnwandigen Formkörpern gebacken, während die Backformen entgegen dem beim Backen in ihnen entstehenden Innendruck durch die geschlossenen Backzangen geschlossen gehalten werden.

Bei diesen Backöfen erstreckt sich die langgestreckte endlose Backzangenkette in zwei übereinanderliegenden Transportebenen durch den jeweiligen langgestreckten, horizontalen Backraum und wird am hinteren Ende des Backraumes und in dem an das vordere Ende des Backraumes nach vorne anschließenden Vorkopf jeweils von der einen Transportebene in die andere Transportebene umgelenkt.

Jede Backzange ist als eine von außen zu betätigende Maschine ausgebildet, mit deren Hilfe die in ihr enthaltene Backform durch den Backofen transportiert, geöffnet und geschlossen und geschlossen gehalten wird. Beim Durchlaufen des Vorkopfes wird die Backform mit Hilfe ihrer Backzange geöffnet, für kurze Zeit offen gehalten und dann wieder geschlossen. Beim Durchlaufen des Backraumes wird die geschlossene Backform mit Hilfe ihrer Backzange geschlossen gehalten. Die endlose Backzangenkette wird durch einen Antriebsmotor angetrieben, der eine kontinuierliche Umlaufbewegung der Backzangenkette erzeugt. Von dieser Umlaufbewegung werden bei jeder Backzange stets gleichbleibende Bewegungsabläufe abgeleitet, wenn diese im Vorkopf die diesen Bewegungsabläufen jeweils zugeordneten, im Vorkopf stationär angeordneten Steuermechanismen passiert, die in Verbindung mit der Umlaufbewegung der Backzangenkette jeweils den betreffenden Bewegungsablauf der Backzange bzw. ihrer Einzelteile erzeugen.

Beim Durchlaufen des Vorkopfes passieren die geöffneten Backzangen die Produktentnahmestation, in der die gebackenen Formkörper aus den geöffneten Backformen entnommen und über die Ausgabestation des Ofens aus dem Vorkopf ausgegeben werden. Nach der Produktentnahmestation passieren die geöffneten Backzangen die Beschickungsstation, in der die dosierten Mengen der formlosen Masse in die leeren, geöffneten Backformen eingebracht werden. Beim Durchlaufen des langgestreckten, horizontalen Backraumes werden die geschlossenen Backformen in den geschlossenen Backzangen beheizt. In einem mit Gas beheizten Ofen werden die Backformen von außen durch heiße Gase beheizt, die im Backraum des Ofens erzeugt und gegen die Backzangen geleitet werden. In einem elektrisch beheizten Ofen werden die Backformen durch in die Zangenhälften der Backzangen eingebaute elektrische Heizelemente beheizt, die beim Durchlaufen des Backraumes von außen mit elektrischer Energie versorgt werden.

Die dünnwandigen Formkörper werden in aufeinanderfolgenden Backzyklen jeweils in den von den Backzangen durch den Backraum im Kreislauf transportierten Backformen hergestellt. Jeder Backzyklus läuft in der betreffenden Backform auf ihrem Weg von der Beschickungsstation durch den Backraum zur Produktentnahmestation ab. Bei jedem einzelnen Backzyklus wird in der Beschickungsstation eine formlose Masse in die, vorher mit Hilfe ihrer Backzange geöffnete Backform eingebracht, die Backform mit Hilfe ihrer Backzange geschlossen und geschlossen gehalten bis sie vor dem Erreichen der Produktentnahmestation mit Hilfe ihrer Backzange wieder geöffnete wird und der dünnwandigen Formkörper aus der offenen Backform entnommen wird.

Wenn die offene Backform von ihrer Backzange neuerlich zur Beschickungsstation transportiert wird, beginnt in dieser Backform der nächste Backzyklus zur Herstellung eines dünnwandigen Formkörpers.

Bei jedem Backzyklus wird die in der geschlossenen Backform eingeschlossene formlose Masse durch den ablaufenden Backprozeß in der von außen durch die Backzange geschlossen gehaltenen Backform verteilt, aufgeschäumt und unter Druck zu einem geschäumten, dünnwandigen Formkörper ausgebacken. Die äußere Gestalt des entstandenen dünnwandigen Formkörpers wird an seiner Oberseite durch die Oberflächengestaltung der Backfläche der oberen Formhälfte der Backform und an seiner Unterseite durch die Oberflächengestaltung der Backfläche der unteren Formhälfte der Backform bestimmt. Die Wandstärke des entstandenen dünnwandigen Formkörpers wird durch den bei geschlossener Backform vorhandenen, gegenseitigen Abstand dieser beiden, einander zugewandten Backflächen bestimmt. Die Ausbildung des äußeren Randes des entstandenen dünnwandigen Formkörpers wird durch die seitliche Begrenzung des Formhohlraumes der geschlossenen Backform bestimmt.

Bei geschlossener Backform und geschlossener Backzange liegen die beiden Zangenhälften und die beiden Formhälften einander gegenüber. Die Zangenhälften stützen sich mit einander gegenseitig zugeordneten Anschlägen aneinander ab. Die an den Vorderseiten der Formhälften angeordneten Backflächen sind einander zugewandt und liegen einander in einem vorgegebenen Abstand gegenüber. Diese beiden, im wesentlichen horizontal angeordneten Backflächen begrenzen zwischen sich den Formhohlraum der geschlossenen Backform, der, je nach dem in der Backform als dünnwandigen Formkörper herzustellenden Produkt, seitlich offen ist oder durch an den Vorderseiten der Formhälften angebrachte Dichtleisten rund um seitlich begrenzt, aber nicht gasdicht abgeschlossen ist. In diesem Formhohlraum wird eine dosierte Menge der formlosen Masse unter Druck zu einem dünnwandigen Formkörper gebacken. Die beim Backen im Formhohlraum entstehenden Backgase bringen die formlose Masse zum Schäumen, verteilen sie im Formhohlraum und strömen zwischen den beiden Backflächen seitlich aus dem Formhohlraum der geschlossenen Backform und damit aus der geschlossenen Backzange in den Backraum des jeweiligen Backofens.

Bei geschlossener Backform und geschlossener Backzange erzeugen die Backgase im Formhohlraum der Backform einen Innendruck, der über die Backflächen auf die Formhälften und von diesen auf die Zangenhälften der Backzange übertragen wird. Diesem Innendruck wirken jeweils die geschlossenen Backzangen entgegen, die während ihres Umlaufes, je nach Backzange und Backform, jeweils durch das Eigengewicht ihrer Zangenhälften oder durch von außen auf sie einwirkende stationäre Niederhalter oder durch an ihren Zangenhälften seitlich angebrachte Backzangenverschlüsse geschlossen gehalten werden und dadurch verhindern, daß ihre mit ihren Anschlägen aneinanderliegenden Zangenhälften durch die Backgase auseinanderbewegt werden.

Der durch die Backgase erzeugte Innendruck steigt in der Anfangsphase des Backprozesses durch die sehr heftige Gasentwicklung an und fällt mit dem fortschreitenden Austritt der Backgase aus dem Formhohlraum wieder ab. Das dabei auftretende Druckmaximum des Innendruckes hängt hauptsächlich von der Ausbildung der seitlichen Begrenzung des Formhohlraumes ab und ist daher bei einem seitlich völlig offenen Formhohlraum deutlich kleiner, als bei einem seitlich rundum durch Dichtleisten begrenzen Formhohlraum, den die Backgase nur durch die wenigen Dampfschlitze der Dichtleisten verlassen können.

Bei einer Backzange, deren gelenkig miteinander verbundenen Zangenhälften die Formhälften einer Backform enthalten, die im geschlossenen Zustand einen seitlich offenen Formhohlraum begrenzt, in dem der Innendruck beim Backen nur geringfügig ansteigt, wird die Backform durch das Eigengewicht der jeweils über dem Formhohlraum liegenden Zangenhälfte bzw. durch einen stationären Niederhalter geschlossen gehalten, der ein Auseinanderbewegen der Zangenhälften einer ihn passierenden Backzange verhindert.

Backzangen, deren Zangenhälften die Formhälften von Backformen enthalten, die im geschlossenen Zustand jeweils einen seitlich rundum durch Dichtleisten begrenzten Formhohlraum begrenzen, in dem der Innendruck beim Backen stark ansteigt, werden an zwei einander gegenüberliegenden Seiten der jeweiligen Backzange seitlich geschlossen gehalten. Bei gelenkig miteinander verbundenen Zangenhälften ist auf der dem Gelenk der Backzange gegenüberliegenden Seite ein Backzangenverschluß vorgesehen, der bei geschlossener Backzange verriegelt wird. Bei gelenklosen Backzangen, deren Zangenhälften zum Öffnen und Schließen der Backform geradlinig zueinander und auseinander bewegt werden, ist an zwei einander gegenüberliegenden Seiten der Backzange jeweils ein Backzangenverschluß vorgesehen, der bei geschlossener Backzange verriegelt wird. Jeder Backzangenverschluß ist ein in die jeweilige Backzange eingebauter, bei geschlossener Backzange von außen zu betätigender Mechanismus, der in seinem verriegelten Zustand die beiden Zangenhälften starr miteinander verbindet. Jeder Backzangenverschluß muß nach dem Schließen der Backzange und vor dem Öffnen der Backzange betätigt werden.

Bei den bekannten Backöfen sind in die Backzangen bzw. in deren Zangenhälften ebene Backplatten eingebaut bzw. integriert, die an der Vorderseite jeweils als obere bzw. untere Formhälfte der Backformen ausgebildet sind und an der Rückseite beheizt werden.

Die bekannten langgestreckten Backöfen mit ihren kontinuierlich umlaufenden Backzangenketten sind in Konstruktion, Aufbau und Funktionsweise, von der Beschickungsstation über die einzelnen Backformen und die sie enthaltenden umlaufenden Backzangen bis zu den stationären Steuermechanismen zum Erzeugen der Bewegungen der einzelnen Teile der umlaufenden Backzangen und zur Ausgabestation für die dünnwandigen Formkörper, jeweils speziell darauf abgestellt, ausschließlich dünnwandige Formkörper mit nur einer einzigen vorgegebene Gestalt aus formlosen Massen herzustellen, die nach einem bestimmten Rezept zubereitet sind.

Solche Backöfen werden für die industrielle Herstellung von eßbaren Waffeln eingesetzt, die in den umlaufenden Backformen der Backzangen aus flüssigen Waffelteigen gebacken werden, die hauptsächlich aus Weizenmehl und Wasser bestehen. Je nach Backofen und Waffelteig können die erzeugten Waffeln ihrer Konsistenz nach knusprige, spröde und leicht zerbrechliche Waffeln sein, die einen Feuchtigkeitsgehalt von maximal 1% - 4% aufweisen, oder ihrer Konsistenz nach weiche elastische Waffeln sein mit einem Feuchtigkeitsgehalt von 8% oder mehr.

Solche Backöfen werden auch für die industrielle Herstellung von flachen verrottbaren Verpackungstassen eingesetzt, die in den umlaufenden Backformen der Backzangen aus gießfähigen, auf Stärkebasis hergestellten, formlosen Massen gebackenen werden und eine elastische Konsistenz mit einem Feuchtigkeitsgehalt von 6% bis 22% aufweisen.

Die bekannten langgestreckten Backöfen mit ihren 18 bis 140 Backzangen enthaltenden, endlosen Backzangenketten sind mechanisch sehr aufwendig gestaltete Backmaschinen. Die Backformen sind in den, aus mehreren Bauteilen zusammengesetzten Backzangen aufgenommen, die mit ihren seitlichen Laufrädern in beiden Transportebenen des Backofens auf seitlichen Laufschienen durch den jeweiligen Backraum laufen. Im Vorkopf sind entlang der Umlaufbahn der Backzangen stationär angeordnete Steuerkurven und Steuermechanismen vorgesehen, die an den vorbeilaufenden Backzangen die Bewegungen der Zangenhälften zum Öffnen und Schließen der Backformen und die Bewegungen der Verschlußorgane der Backzangenverschlüsse zum Verriegeln und Entriegeln der geschlossenen Backzangen erzeugen. Mechanisch aufwendig ist auch die endlose Backzangenkette, für die eine sich am Ofengestell abstützende, pneumatische oder hydraulische Kettenspannvorrichtung erforderlich ist und die zusätzlich zu den Backzangen noch aus zwei seitlichen Transportketten besteht, die die Backzangen untereinander verbinden und über an beiden Enden des Backofens angeordnete Kettenumlenkungen umlaufen.

Bei den bekannten langgestreckten Backöfen für die Herstellung von dünnwandigen Formkörpern zeigt sich die durch die Anzahl ihrer Backzangen bzw. Backformen bestimmte unterschiedliche Kapazität zur Herstellung von dünnwandigen Formkörpern hauptsächlich in der unterschiedlichen Länge der Backöfen bzw. ihrer Backräume. Wenn ein bestehender langgestreckter Waffelbackofen durch einen neuen langgestreckten Backofen mit höherer Kapazität ersetzt werden soll, so ist am Aufstellungsort des Backofens eine längere Stellfläche für den neuen Backofen erforderlich. Bei begrenzten Platzverhältnissen wird die am Aufstellungsort maximal zur Verfügung stehende Länge der Stellfläche sehr rasch zum limitierenden Faktor für jede weitere Kapazitätssteigerung des langgestreckten Backofens und der an ihn angeschlossenen Produktionsanlage zur weiteren Behandlung und Verarbeitung der dünnwandigen Formkörper bis hin zu den am Ende der jeweiligen Produktionsanlage angeordneten Verpackungsmaschine für das aus den dünnwandigen Formkörpern hergestellte Endprodukt.

Aus der DE-PS 714 019 ist eine Waffelbackmaschine bekannt, bei der über seitliche Laufrollen in den Seitenwänden des Maschinengestelles geführte Waffelformkästen vorgesehen sind, die an ihren Ober- bzw. Unterseiten Vertiefungen mit einem der unteren bzw. oberen Seite der herzustellenden Waffel entsprechenden Muster aufweisen und jeweils über ihre Unterseite nach unten vorstehende, seitliche Hakenfallen und diesen zugeordnete, ihrer Oberseite benachbarte Verriegelungsstifte tragen. Diese Formkästen werden in einer unteren Transportebene an der Oberseite mit Backmasse beschickt und am unteren Ende eines, sich durch einen vertikalen Backschacht nach oben zu einer oberen Entnahmestation für die gebackenen Waffeln erstreckenden, sich auf ortsfesten Klinken abstützenden Formkastenstapels fortlaufend zu Backformen zusammengesetzt, die jeweils aus zwei aufeinanderliegenden durch die an den Verriegelungsstiften des unteren Formkastens festgezogenen Hakenfallen des oberen Formkastens starr miteinander verbundenen Formkästen bestehen. Am unteren Ende des Backschachtes wird jeweils ein an der Oberseite mit Backmasse beschickter Formkasten durch einem Winkelhebel eines Schubstangengetriebes von unten in den Backschacht gedrückt und mit dem unterster Formkasten des Formkastenstapels zu einer Backform zusammengesetzt. Dabei wird der gesamte Formkastenstapel von den ortsfesten Klinken abgehoben und um eine Formkastenhöhe angehoben, wobei die Hakenfallen des untersten Formkastens des Stapels an den Verriegelungsstiften des neu hinzugekommenen Formkastens festgezogen werden und dann der gesamte Stapel mit seinem neuen untersten Formkasten wieder auf die ortsfesten Klinken abgesetzt wird. Mit jedem Anfügen eines Formkastens am unteren Ende des Stapels wandern die Backformen im Stapel schrittweise nach oben durch den Backschacht, während in den von ihnen gebildeten Backformen die Waffeln gebacken werden. Durch das Anheben des Stapels werden bei der obersten Backform des Stapels die Hakenfallen des obersten Formkastens von den Verriegelungsstiften des darunterliegenden Formkastens weggeschwenkt und der oberste Formkasten an die beiden, in den Seitenwänden des Maschinengestelies umlaufenden, endlosen Gliederketten eines Endlosförderers angekuppelt, der diesen Formkasten unter Auflösung der obersten Backform vom Formkastenstapel abhebt und durch eine obere Transportebene und eine hintere vertikale Transportstrecke in die untere Transportebene und zurück zum unteren Ende des Backschachtes transportiert, wo dieser Formkasten von den Gliederketten des Endlosförderers wieder abgekuppelt wird. Beim Abheben des obersten Formkasten vom Stapel bleibt die gebackene Waffel auf der Oberseite des darunterliegenden Formkastens liegen und wird in der oberen Entnahmestation durch einen Abstreifer von diesem Formkasten entfernt. Diese Waffelbackmaschine besitzt ein kurzen Backschacht mit einem niedrigen Formkastenstapel, der aus wenigen, relativ dünnwandigen Formkästen besteht, die untereinander über Hakenfallen und Verriegelungsstifte starr miteinander verbunden sind, um den beim Backen der Waffeln in den von den Formkästen gebildeten Backformen auftretenden hohen Innendrücken stand halten zu können.

Aus der DE-PS 714 019 ist weiters eine geschlossene Backformen entlang einer vertikalen Transportstrecke durch einen vertikalen Backschacht transportierende Waffelbackmaschine bekannt, bei der die Backformen von über seitliche Laufrollen in den Seitenwänden des Maschinengestelles geführten Backformoberteilen, die über ihre Unterseite nach unten vorstehende, seitliche Hakenfallen tragen, und von auf die Backformoberteile aufsetzbaren und die den Hakenfallen zugeordneten Verriegelungsstifte tragenden Backformunterteilen gebildet werden. Am oberen Ende des Backschachtes werden die Backformoberteile an die beiden, in den Seitenwänden des Maschinengestelles umlaufenden, endlosen Gliederketten eines Endlosförderers angekuppelt, der die Backformoberteile und die auf deren Oberseiten aufliegenden Backformunterteile durch eine obere Transportebene und durch eine hintere vertikale Transportstrecke in eine untere Transportebene und durch diese zum unteren Ende des Backschachtes transportiert, wo die die Backformunterteile tragenden Backformoberteile von den Gliederketten des Endlosförderers wieder abgekuppelt werden. Am unteren Ende des Backschachtes wird fortlaufend jeweils ein beim Passieren der unteren Transportebene mit Backmasse beschickter Backformunterteil mit dem ihm vorangehenden Backformoberteil zu einer Backform zusammengesetzt und der Backformoberteil durch Festziehen seiner Hakenfallen an den Verriegelungsstiften des Backformunterteiles mit diesem starr verbunden. Die so entstandenen, geschlossenen und verriegelten Backformen werden mit Hilfe eines vertikalen Schubstangengetriebes durch die von ortsfesten Klinken gebildeten, mit Abstand übereinanderliegenden Stapelebenen des Backschachtes schrittweise von einer Stapelebene zur nächsten nach oben durch den Backschacht transportiert, während in ihnen die Waffeln gebacken werden. Am oberen Ende des Backschachtes werden die Backformen nach dem Wegschwenken der Hakenfallen von den Verriegelungsstiften wieder in Backformoberteile und Backformunterteile aufgelöst. Dabei wird der Backformoberteil der in der vorletzten Stapelebene angeordneten, obersten Backform des Stapels an die endlosen Gliederketten des Endlosförderers angekuppelt, der diesen Backformoberteil von dem unter ihm liegenden Backformunterteil abhebt und den über ihm, in der letzten Stapelebene angeordneten, eine gebackene Waffel tragenden Backformunterteil nach oben mitnimmt und zu der in der oberen Transportebene angeordneten Entnahmestation transportiert, wo die Waffel von diesem Backformunterteil abgenommen wird. Der auf der vorletzten Stapelebene verbleibende, eine gebackene Waffel tragende Backformunterteil wird beim nächsten Anheben des Stapels durch das Schubstangengetriebe in die letzte Stapelebene angehoben.

### Zusammenfassung der Erfindung:

Aufgabe der Erfindung ist es, einen kompakten Backofen für die Herstellung von dünnwandigen Formkörpern in jeweils aus zwei Formhälften bestehenden, auf- und zumachbaren Backformen anzugeben.

Zur Lösung dieser Aufgabe schlägt die Erfindung einen Backofen für die Herstellung von dünnwandigen Formkörpern in auf- und zumachbaren Backformen vor, die mit ihren Formhälften die äußere Gestalt der in ihnen hergestellten Formkörper bestimmen. Bei diesem Backofen werden die Formhälften von zumindest paarweise übereinanderstapelbaren Backplatten gebildet, die im Backofen in einem geschlossenen Kreislauf transportiert werden, der eine, einer unteren Beschickungsstation nachgeordnete, durch einen vertikalen Backschacht zu einer oberen Entnahmestation führende, vertikale Transportstrecke enthält, an deren unterem Ende die in der unteren Beschickungsstation mit Vorprodukt beschickten, die unteren Formhälften bildenden Backplatten zusammen mit den die oberen Formhälften bildenden Backplatten in einen aus zumindest paarweise aufeinanderliegenden Backplatten bestehenden, vertikalen Stapel integriert werden, der sich entlang der vertikalen Transportstrecke durch den Backschacht erstreckt und am oberen Ende der Transportstrecke in die einzelnen Backplatten aufgelöst wird, während die von den paarweise aufeinanderliegenden Backplatten gebildeten Backformen im Stapel schrittweise nach oben und durch den Backschacht wandern und die in den Backformen enthaltenen Vorprodukte zu dünnwandigen Formkörpern gebacken werden, die beim Auflösen des Stapels in der oberen Entnahmestation von den vereinzelten Backplatten abgenommen werden. Dieser Backofen ist erfindungsgemäß dadurch gekennzeichnet, daß der von den Backplatten zu durchlaufende geschlossene Kreislauf eine zweite, einer oberen Beschickungsstation nachgeordnete, durch einen vertikalen Backschacht zu einer unteren Entnahmestation führende, vertikale Transportstrecke enthält, an deren oberem Ende die in der oberen Beschickungsstation mit Vorprodukt beschickten, die unteren Formhälften bildenden Backplatten zusammen mit den die oberen Formhälften bildenden Backplatten in einen aus zumindest paarweise aufeinanderliegenden und durch Verriegelungsvorrichtungen starr miteinander verbundenen Backplatten bestehenden, zweiten vertikalen Stapel integriert werden, der sich entlang der zweiten vertikalen Transportstrecke durch den Backschacht erstreckt und am unteren Ende der zweiten vertikalen Transportstrecke nach dem Lösen der Verriegelungsvorrichtungen in die einzelnen Backplatten aufgelöst wird, während die von den paarweise aufeinanderliegenden und durch Verriegelungsvorrichtungen starr miteinander verbundenen Backplatten gebildeten Backformen im zweiten Stapel schrittweise nach unten und durch den Backschacht wandern und die in den Backformen enthaltenen Vorprodukte zu dünnwandigen Formkörpern gebacken werden, die beim Auflösen des zweiten Stapels in der unteren Entnahmestation von den vereinzelten Backplatten abgenommen werden.

Diese Ausbildung erlaubt eine deutliche Vergrößerung der Herstellungskapazität des Backofens, die weitgehend unabhängig von der Größe der benötigten Stellfläche für den jeweiligen Backofenturm gestaltet werden kann, weil jede Vergrößerung der Herstellungskapazität nur zu einer Erhöhung der Bauhöhe des Backofenturmes führt. Dies ist besonders bei beengten Platzverhältnissen von Vorteil.

Gemäß einem weiteren Merkmal der Erfindung kann vorgesehen sein, daß bei der zweiten vertikalen Transportstrecke oberhalb des Backschachtes eine der oberen Beschickungsstation zugeordnete, obere Verriegelungsstation zum Verriegeln der neuerlich mit Vorprodukt beschickten, von paarweise aufeinanderliegenden Backplatte gebildeten Backformen vorgesehen ist.

Gemäß einem weiteren Merkmal der Erfindung kann vorgesehen sein, daß oberhalb des Backschachtes eine den oberen Enden beider Transportstrecken zugeordnete Übergabevorrichtung für die von paarweise aufeinanderliegenden Backplatten gebildeten, verriegelten Backformen vorgesehen ist.

Gemäß einem weiteren Merkmal der Erfindung kann für jede vertikale Transportstrecke ein eigener Backschacht vorgesehen sein.

Gemäß einem weiteren Merkmal der Erfindung kann vorgesehen sein, daß am unteren Ende der ersten vertikalen Transportstrecke eine, den ersten Stapel bildende erste Stapelvorrichtung und am unteren Ende der zweiten vertikalen Transportstrecke eine, den zweiten Stapel auflösende zweite Stapelvorrichtung vorgesehen ist.

Gemäß einem weiteren Merkmal der Erfindung kann vorgesehen sein, daß die an den unteren Enden der vertikalen Transportstrecken angeordneten Stapelvorrichtungen jeweils als die der betreffenden Transportstrecke zugeordneten Vertikalförderer ausgebildet sind.

Gemäß einem weiteren Merkmal der Erfindung kann vorgesehen sein, daß am oberen Ende der ersten Transportstrecke eine oberhalb des Backschachtes angeordnete, den ersten Stapel zugeordnete Vereinzelungsvorrichtung zum Auflösen des ersten Stapels vorgesehen ist.

Gemäß einem weiteren Merkmal der Erfindung kann vorgesehen sein, daß die Backplatten mit einander gegenseitig zugeordneten oberen bzw. unteren Stapelflächen versehen sind, mit denen sie innerhalb des jeweiligen Stapels aufeinanderliegen.

Gemäß einem weiteren Merkmal der Erfindung kann vorgesehen sein, daß an den Oberseiten der Backplatten jeweils mehrere, als untere Backformhälften ausgebildete Backformteile nebeneinander angeordnet sind und daß an den Unterseiten der Backplatten jeweils mehrere, als obere Backformhälften ausgebildete Backformteile nebeneinander angeordnet sind.

Gemäß einem weiteren Merkmal der Erfindung kann vorgesehen sein, daß die den Oberseiten zugeordneten, oberen Stapelflächen der Backplatten jeweils in die Dichtleisten der an den Oberseiten der Backplatten angeordneten, unteren Formhälften integriert sind und daß die den Unterseiten der Backplatten zugeordneten, unteren Stapelflächen jeweils in die Dichtleisten der an den Unterseiten der Backplatten angeordneten oberen Formhälften integriert sind, wobei die Backplatten innerhalb des jeweiligen Stapels mit den Dichtleisten ihrer Backformhälften aufeinanderliegen.

Gemäß einem weiteren Merkmal der Erfindung kann vorgesehen sein, daß jede Backplatte zum starren Verbinden zweier übereinandergestapelter Backplatten mit seitlichen Eingriffsflächen für von außen auf zwei übereinandergestapelte Backplatten aufzusetzende Verriegelungsvorrichtungen versehen ist.

Gemäß einem weiteren Merkmal der Erfindung kann vorgesehen sein, daß die Backplatten jeweils als an ihren Vorderseiten die oberen bzw. unteren Formhälften tragenden obere bzw. untere Backplatten ausgebildet sind, die an ihren Vorderseiten und an ihren Rückseiten einander gegenseitig zugeordnete Stapelflächen tragen, mit denen sie im übereinandergestapelten Zustand aufeinanderliegen, und daß zum starren Verbinden der paarweise mit ihren Vorderseiten übereinandergestapelten Backplatten mit beiden Backplatten starr verbindbare Verriegelungsvorrichtung vorgesehen sind.

Gemäß einem weiteren Merkmal der Erfindung kann vorgesehen sein, daß bei den oberen und unteren Backplatten die ihren Vorderseiten zugeordneten Stapelflächen jeweils in die Dichtleisten ihrer Formhälften integriert sind und die mit ihren Vorderseiten paarweise übereinandergestapelten Backplatten mit den Dichtleisten ihrer Formhälften aufeinanderliegen.

Gemäß einem weiteren Merkmal der Erfindung kann vorgesehen sein, daß die oberen und unteren Backplatten mit seitlichen Eingriffsflächen für auf sie von außen aufzusetzende Verriegelungsvorrichtungen versehen sind.

Gemäß einem weiteren Merkmal der Erfindung kann vorgesehen sein, daß die oberen und unteren Formhälften von beidseitig verwendbaren, von innen beheizbaren Backplatteneinheiten gebildet werden, die mit ihren Oberseiten die unteren Formhälften bilden und mit ihren Unterseiten die oberen Formhälften bilden und in beiden Stapeln lückenlos aufeinanderliegen.

Gemäß einem weiteren Merkmal der Erfindung kann vorgesehen sein, daß die beidseitig verwendbaren Backplatteneinheiten innerhalb des, in der nach oben führenden, ersten vertikalen Transportstrecke angeordneten, ersten Stapels nur lose aufeinanderliegen und innerhalb des, in der nach unten führenden, zweiten vertikalen Transportstrecke angeordneten, zweiten Stapels paarweise durch Verriegelungsvorrichtungen starr miteinander verbunden sind, wobei innerhalb des ersten Stapels jede einzelne, von zwei aufeinanderliegenden Backplatteneinheiten gebildete Backform entgegen dem in ihr beim Backen entstehenden Innendruck nur durch das Gewicht des jeweils auf ihr lastenden Teiles des ersten Stapels geschlossen gehalten wird, während sie innerhalb des ersten Stapels schrittweise nach oben, durch den vertikalen Backschacht hindurch zur oberen Entnahmestation wandert.

Die erfindungsgemäße Ausbildung erlaubt eine deutliche Verringerung der Anzahl der ständig zu bewegenden Teile des Backofens durch den Ersatz der sich entlang des Backschachtes oder durch diesen erstreckenden Transportvorrichtung durch den sich ständig erneuernden Backformenstapel, der außerhalb des Backschachtes fortlaufend neu gebildet bzw. aufgelöst wird. Der sich ständig erneuernde Backformenstapel erfordert auch deutlich weniger Wartung als eine sich entlang dem Backschacht oder durch diesen erstreckende Transportvorrichtung für die geschlossenen Backformen oder als eine den gesamten Backofen durchlaufende endlose Transportvorrichtung mit allen ihren beweglichen -Teilen und den jeweils erforderlichen Umlenkungen ihrer endlosen Transportketten und dergleichen.

Bei der erfindungsgemäßen Ausbildung sind alle beweglichen Teile der den Transport der geschlossenen Backformen durch den jeweiligen Backschacht bewerkstelligenden Vorrichtungen außerhalb des Backschachtes angeordnet und daher weder der Atmosphäre des Backschachtes mit ihrem hohen Anteil an Wasserdampf noch den hohen Temperaturen des Backschachtes im Bereich von 170 bis 240 Grad Celsius ausgesetzt.

Die beidseitig verwendbaren, stapelbaren Backplatteneinheiten mit den an ihrer Oberseite bzw. Unterseite angeordneten Backflächen erlauben eine verwindungssteife und biegesteife Gestaltung des die Backflächen an ihren Rückseiten abstützenden Plattenkörpers, wobei die in den Plattenkörper eingelassenen Heizkanäle den Plattenkörper zusätzlich versteifen. Die einander gegenseitig zugeordneten Stapelflächen erlauben eine genaue gegenseitige Ausrichtung der beiden Formhälften einer von zwei aufeinanderliegenden Backplatteneinheit gebildeten Backform beim Schließen der Backform bzw. Aufeinanderlegen der beiden Backplatteneinheiten.

Die stapelbaren Backplatteneinheiten können einstückig ausgebildet sein, wobei die an ihren Oberseiten und Unterseiten angeordneten Backflächen und Stapelflächen in den jeweiligen Plattenkörper integriert sind.

Die stapelbaren Backplatteneinheiten können jeweils aus einem von einer oberen Backplatte gebildeten Oberteil und einem von einer unteren Backplatte gebildeten Unterteil bestehen. Die oberen Backplatten bilden mit den an ihren Vorderseiten ausgebildeten unteren Backformhälften die Oberseiten der Backplatteneinheiten und mit den an ihren Rückseiten ausgebildeten Versteifungsrippen den oberen Teil der Begrenzungswände der Heizkanäle der Backplatteneinheit, Die unteren Backplatten bilden mit den an ihren Vorderseiten ausgebildeten oberen Backformhälften die Unterseiten der Backplatteneinheiten und mit den an ihren Rückseiten ausgebildeten Versteifungsrippen den unteren Teil der Begrenzungswände der Heizkanäle der Backplatteneinheit. Diese oberen und unteren Backplatten liegen an ihren Rückseiten mit den Stirnseiten ihrer Versteifungsrippen aufeinander und sind paarweise fix miteinander zur jeweiligen Backplatteneinheiten verbunden.

Diese beidseitig verwendbaren, stapelbaren Backplatteneinheiten, die einstückig ausgebildet sein können oder jeweils aus einem quaderförmigen Plattenkörper mit an der Ober- und Unterseite aufgesetzten Backplatten bestehen können oder jeweils aus zwei mit ihren Rückseiten aneinanderliegenden Backplatten zusammengesetzt sein können, werden zur Bildung von Backformen übereinandergestapelt und dabei mit ihren einander gegenseitig zugeordneten Stapelflächen von oben oder von unten aneinandergelegt. Dabei wird jeweils eine an der Unterseite der oberen Backplatteneinheit ausgebildete, obere Formhälfte mit einer an der Oberseite der unteren Backplatteneinheit ausgebildeten, unteren Formhälfte einer Backform zusammengesetzt und diese Backform gleichzeitig geschlossen. Die von zwei aufeinanderliegenden Backplatteneinheiten nach oben und unten begrenzte geschlossene Backform kann einen einzigen Formhohlraum zum Herstellen von dünnwandigen Formkörpern enthalten. Diese Backform kann auch mehrere gleich große Formhohlräume zum gleichzeitigen Herstellen mehrerer dünnwandiger Formkörper in einer einzigen Backform enthalten. Diese Backform kann auch mehrere verschieden gestaltete Formhohlräume zum gleichzeitigen Herstellen mehrerer verschiedener dünnwandiger Formkörper in einer einzigen Backform enthalten.

Diese beidseitig verwendbaren, stapelbaren Backplatteneinheiten können zum starren Verbinden zweier übereinandergestapelter Backplatteneinheiten mit der von diesen eingeschlossenen Backform zugeordneten Verriegelungsvorrichtungen versehen sein, deren Oberteile an der oberen Backplatteneinheit und deren Unterteile an der unteren Backplatteneinheit angebracht sind und die Verriegelungsorgane umfassen, die zum starren Verbinden der beiden Backplatteneinheiten auf den Oberteil und den Unterteil der betreffenden Verriegelungsvorrichtung aufzusetzen sind und zum Lösen der betreffenden Verriegelungsvorrichtung von deren Oberteil und Unterteil wieder abgezogen werden müssen. Jede einzelne Backplatteneinheit trägt die Unterteile jener Verriegelungsvorrichtungen, die der von ihr nach unten begrenzten Backform zugeordnet sind, und die Oberteile jener Verriegelungsvorrichtungen, die der von ihr nach oben begrenzten Backform zugeordnet sind.

Die beidseitig verwendbaren, stapelbaren Backplatteneinheiten können zum starren Verbinden zweier übereinandergestapelter Backplatteneinheiten mit der von diesen eingeschlossenen Backform zugeordneten Verriegelungsvorrichtungen versehen sein, die aus gegenseitig miteinander in Eingriff zu bringenden Oberteilen und Unterteilen bestehen, wobei jede einzelne Backplatteneinheit die Unterteile jener Verriegelungsvorrichtungen trägt, die der von ihr nach unten begrenzten Backform zugeordnet sind, und die Oberteile jener Verriegelungsvorrichtungen, die der von ihr nach oben begrenzten Backform zugeordnet sind.

Zum starren Verbinden zweier übereinandergestapelter Backplatteneinheiten können diese mit den aus der WO 96/14750 bekannten selbsthemmenden Klemmvorrichtungen zum Aneinanderpressen der Backformteile der geschlossenen Backform ausgerüstet sein. Diese Klemmvorrichtungen drükken bei ihrem Festklemmen die beiden, die geschlossene Backform zwischen sich einschließenden Backplatteneinheiten mit einer vorgegebenen Vorspannkraft gegeneinander und halten diese Vorspannkraft durch den selbsthemmenden Reibungseingriff ihres jeweiligen Klemmelementes bis zum gewaltsamen Lösen der Klemmvorrichtung aufrecht.

Eine selbsthemmende Klemmvorrichtung kann einen an der einen Backplatteneinheit schwenkbar gelagerten Klemmhebel mit einem seiner Schwenkachse zugewandten Klemmabschnitt und eine an der anderen Backplatteneinheit angeordnete Klemmfläche umfassen. Zum Festziehen der Klemmvorrichtung wird der Klemmhebel mit seinem Klemmabschnitt mit der Klemmfläche in einen kraftschlüssigen und selbsthemmenden Reibungseingriff gebracht und in diesem Reibungseingriff an der Klemmfläche entlang bewegt, bis das Bewegungsspiel des Klemmhebels beseitigt und die gewünschte Vorspannkraft durch die elastische Dehnung des Klemmhebels auf die beiden aufeinanderliegenden Backplatteneinheiten aufgebracht ist.

Eine selbsthemmende Klemmvorrichtung kann ein als im wesentlichen C-förmige Klammer ausgebildetes Klemmelement, das mit einander zugewandten Klemmabschnitten an seinen Enden versehen ist, und zwei diesen Klemmabschnitten zugeordnete und von einander abgewandte Klemmflächen an den beiden Backplatteneinheiten umfassen. Zum Festziehen der Klemmvorrichtung wird die Klammer mit ihren beiden Klemmabschnitten auf die ihnen zugeordneten Klemmflächen der beiden Backplatteneinheiten von außen aufgeschoben, mit diesen in einen kraftschlüssigen und selbsthemmenden Reibungseingriff gebracht und in diesem Reibungseingriff an beiden Klemmflächen entlang bewegt, bis das zum Aufschieben erforderliche Bewegungsspiel der Klammer beseitigt und die gewünschte Vorspannkraft durch die elastische Dehnung der Klammer auf die beiden aufeinanderliegenden Backplatteneinheiten aufgebracht ist.

Zwei übereinandergestapelte Backplatteneinheiten können an zwei entgegengesetzten Stirnseiten jeweils durch zwei entlang der jeweiligen Stirnseite im Abstand voneinander angeordnete selbsthemmende Klemmvorrichtungen starr miteinander verbunden werden, die jeweils einen, an der einen Backplatteneinheit um eine horizontale Schwenkachse schwenkbar gelagerten Klemmhebel und eine diesem zugeordnete, an der anderen Backplatteneinheit angeordnete Klemmfläche umfassen, an der jeweils der Klemmhebel der betreffenden Klemmvorrichtung mit seinem Klemmabschnitt im kraftschlüssigen und selbsthemmenden Reibungseingriff entlang geschwenkt werden kann, bis das Bewegungsspiel des Klemmhebels beseitigt und die gewünschte Vorspannkraft durch die elastische Dehnung des jeweiligen Klemmhebels auf die beiden aufeinanderliegenden Backplatteneinheiten aufgebracht ist.+

Die beidseitig verwendbaren, stapelbaren Backplatteneinheiten werden in einem geschlossenen Kreislauf durch den jeweiligen Backofen transportiert und passieren den jeweiligen vertikalen Backschacht des Backofens in einem vertikalen Stapel, der aus liegend gestapelten Backplatteneinheiten besteht und an einem Ende fortlaufend um eine Backplatteneinheit ergänzt und am anderen Ende fortlaufend um eine Backplatteneinheit verringert wird. Die beidseitig verwendbaren, stapelbaren Backplatteneinheiten erlauben es, den Bildungsvorgang des betreffenden Stapels mit dem Schließvorgang der Backformen zu kombinieren und den Auflösevorgang des betreffenden Stapels mit dem Öffnungsvorgang der Backformen zu kombinieren, sodaß für das Schließen der Backformen nach dem Beschicken mit Vorprodukt und für das Öffnen der Backformen vor dem Entnehmen der gebackenen Formkörper keinerlei zusätzliche Mechanismen oder Betätigungsvorrichtungen für die Backplatteneinheiten erforderlich sind. Die den jeweiligen Stapel erzeugende Stapelvorrichtung des Backofens stapelt die Backplatteneinheiten von oben bzw. von unten übereinander und schließt dabei gleichzeitig die Backformen. Die den jeweiligen Stapel auflösende Vereinzelungsvorrichtung des Backofens nimmt die Backplatteneinheiten vom betreffenden Stapel nach oben bzw. unten ab und öffnet dabei gleichzeitig die Backformen bzw. löst diese in ihre Backformhälften auf.

Bei erfindungsgemäßen Backöfen, bei denen die beidseitig verwendbaren, stapelbaren Backplatteneinheiten bei ihrer Integration in den betreffenden Stapel und dem damit verbundenen Schließen der Backformen jeweils mit der in diesen Stapel bereits vorangehend integrierten Backplatteneinheit durch Verriegelungsvorrichtungen oder durch selbsthemmende Klemmvorrichtungen starr verbunden werden, können die Verriegelungsvorrichtungen bzw. die selbsthemmenden Klemmvorrichtungen selbsttätig ausgebildet sein, sodaß sie die beiden Backplatteneinheiten während des Stapelvorganges selbsttätig starr miteinander verbinden und erst vor den Vereinzeln der Backplatteneinheiten aktiv durch eine Betätigungsvorrichtung gelöst werden müssen.

Diese Betätigungsvorrichtung kann in die jeweilige Vereinzelungsvorrichtung integriert sein, die beim Erfassen der letzten Backplatteneinheit des jeweiligen Stapels die Verriegelungsvorrichtungen bzw. die selbsthemmenden Klemmvorrichtungen löst, bevor sie die letzten Backplatteneinheit vom Stapel nach oben bzw. unten abnimmt. Bei von außen zu betätigenden Verriegelungsvorrichtungen kann die Vorrichtung zum Verriegeln der Verriegelungsvorrichtungen in die den Stapel erzeugende Stapelvorrichtung integriert sein. Bei von außen zu betätigenden selbsthemmenden Klemmvorrichtungen kann die Betätigungsvorrichtung, die die jeweilige selbsthemmende Klemmvorrichtung bis zum Aufbringen der gewünschten, die beiden benachbarten Backplatteneinheiten gegeneinander drückenden Vorspannkraft festzieht, in die den Stapel erzeugende Stapelvorrichtung integriert sein.

Bei einem Stapel, der aus beidseitig verwendbaren, stapelbaren Backplatteneinheiten besteht an seinem unteren Ende fortlaufend neu gebildet und an seinem oberen Ende fortlaufend wieder aufgelöst wird, werden die Backplatteneinheiten am unteren Ende des Stapels von unten übereinandergestapelt und am oberen Ende nach oben vereinzelt. In der dem unteren Ende des Stapels zugeordneten Beschickungsstation wird eine neue Backplatteneinheit an ihrer Oberseite mit Vorprodukt beschickt, bevor sie im nächsten Stapelvorgang in den mit seinem gesamten Gewicht auf seiner untersten Backplatteneinheit ruhenden Stapel integriert wird. Die neue Backplatteneinheit wird unter den Stapel befördert und von unten gegen die unterste Backplatteneinheit des Stapels angedrückt, bis sie als neue unterste Backplatteneinheit des Stapels dessen gesamtes Gewicht trägt. In diesem Stapelvorgang wird der Stapel an seinem unteren Ende um eine Backplatteneinheit ergänzt und gleichzeitig die an der Unterseite seiner untersten Backplatteneinheit ausgebildete obere Formhälfte mit der mit Vorprodukt beschickten unteren Formhälfte an der Oberseite der neuen Backplatteneinheit zu einer neuen geschlossenen Backform zusammengesetzt. Diese Backform ist in dem von den übereinander gestapelten Backplatteneinheiten gebildeten Backformenstapel die unterste Backform. Der Formhohlraum dieser Backform wird entgegen dem beim Backen entstehenden Innendruck durch das Gewicht des gesamten Stapels geschlossen gehalten. Diese Backform wandert zusammen mit den beiden ihren Formhohlraum begrenzenden Backplatteneinheiten mit jedem weiteren Stapelvorgang im Stapel um eine Etage nach oben und wird in jeder Etage durch das Gewicht des über dieser Etage liegenden Teiles des Stapels geschlossen gehalten. Am oberen Ende des Stapels wird der Formhohlraum dieser Backform nur mehr durch das Gewicht der ihn nach oben begrenzenden Backplatteneinheit geschlossen gehalten und mit dem Abheben dieser Backplatteneinheit beim Auflösen des Stapels ebenfalls aufgelöst. Der in diesem Formhohtraum hergestellte dünnwandige Formkörper bleibt auf der an der Oberseite der obersten Backplatteneinheit des Stapels ausgebildeten unteren Formhälfte liegen und kann von dieser direkt abgenommen werden.

Bei einem Stapel, der aus stapelbaren, beidseitig verwendbaren und paarweise durch Verriegelungsvorrichtungen bzw. selbsthemmende Klemmvorrichtungen starr miteinander verbindbaren Backplatteneinheiten besteht und an seinem oberen Ende fortlaufend neu gebildet und an seinem unteren Ende fortlaufend wieder aufgelöst wird, werden die Backplatteneinheiten am oberen Ende des Stapels von oben übereinandergestapelt und am unteren Ende nach unten vereinzelt. In der dem oberen Ende des Stapels zugeordneten Beschickungsstation wird die Oberseite des Stapels mit Vorprodukt beschickt, bevor eine neue Backplatteneinheit auf den Stapel aufgesetzt und durch Verriegeln der Verriegelungsvorrichtungen bzw. Festziehen der selbsthemmenden Klemmvorrichtungen mit der obersten Backplatteneinheit des Stapels starr verbunden wird. In diesem Stapelvorgang wird der Stapel an seinem oberen Ende um eine Backplatteneinheit ergänzt. Gleichzeitig wird die mit Vorprodukt beschickte untere Backformhälfte an der Oberseite der obersten Backplatteneinheit des Stapels mit der oberen Backformhälfte an der Unterseite der neuen Backplatteneinheit zu einer neuen geschlossenen Backform zusammengesetzt und die Backformhälften dieser Backform werden durch die Verriegelungsvorrichtungen bzw. selbsthemmenden Klemmvorrichtungen starr miteinander verbunden. Diese neugebildete Backform ist in dem von den übereinander gestapelten Backplatteneinheiten gebildeten Backformenstapel die oberste Backform, die entgegen dem beim Backen in ihr entstehenden Innendruck durch die verriegelten Verriegelungsvorrichtungen bzw. durch die festgezogenen selbsthemmenden Klemmvorrichtungen geschlossen gehalten wird. Diese Backform wandert mit den beiden sie begrenzenden Backplatteneinheiten mit jedem weiteren Stapelvorgang im Stapel um eine Etage nach unten. Beim Erreichen des unteren Endes des Stapels bildet diese Backform die unterste Backform des Stapels und die sie nach unten begrenzende Backplatteneinheit die unterste Backplatteneinheit des Stapels, die mit einer seitlichen Haltevorrichtung im Eingriff steht und das Gewicht des gesamten Stapels trägt. Am unteren Ende des Stapels wird diese Backform durch das Gewicht des gesamten Stapels geschlossen gehalten und mit dem Vereinzeln der untersten Backplatteneinheit beim Auflösen des Stapels ebenfalls aufgelöst. Die dieser Backform zugeordneten verriegelten Verriegelungsvorrichtungen bzw. festgezogenen selbsthemmenden Klemmvorrichtungen werden spätestens vor dem Vereinzeln der untersten Backplatteneinheit des Stapels gelöst. Zum Auflösen des Stapels wird der gesamte Stapel angehoben, die seitliche Haltevorrichtung von der die unterste Backform nach unten begrenzenden Backplatteneinheit des Stapels gelöst, der Stapel um eine Etage abgesenkt, die seitliche Haltevorrichtung mit der die unterste Backform nach oben begrenzenden Backplatteneinheit des Stapels in Eingriff gebracht und der Stapel auf der seitlichen Haltevorrichtung abgesetzt. Die so vereinzelte unterste Backplatteneinheit des Stapels wird samt dem auf ihr liegenden dünnwandigen Formkörper vom unteren Ende des Stapels weg nach unten abgesenkt und dabei gleichzeitig die von ihr nach unten begrenzte Backform aufgelöst. Der in dieser Backform hergestellte dünnwandige Formkörper bleibt auf der Oberseite der abgesenkten Backplatteneinheit liegen und kann von dieser direkt abgenommen werden.

Bei einem Stapel, der aus stapelbaren, beidseitig verwendbaren und paarweise durch Verriegelungsvorrichtungen bzw. selbsthemmende Klemmvorrichtungen starr miteinander verbindbaren Backplatteneinheiten besteht und an seinem unteren Ende fortlaufend neu gebildet und an seinem oberen Ende fortlaufend wieder aufgelöst wird, können die Backplatteneinheiten am unteren Ende des Stapels von unten übereinandergestapelt.werden, ohne aufeinanderliegende Backplatteneinheiten mit Hilfe der Verriegelungsvorrichtungen bzw. der selbsthemmenden Klemmvorrichtungen starr miteinander zu verbinden.

Zum starren Verbinden zweier mit ihren Vorderseiten übereinandergestapelten Backplatten jeder Backform können die aus der WO 96/14750 bekannten selbsthemmenden Klemmvorrichtungen zum Aneinanderpressen der Backformteile der geschlossenen Backform vorgesehen sein. Diese Klemmvorrichtungen drücken bei ihrem Festklemmen die beiden übereinandergestapelten Backplatten mit einer vorgegebenen Vorspannkraft gegeneinander und halten diese Vorspannkraft durch den selbsthemmenden Reibungseingriff ihres jeweiligen Klemmelementes bis zum gewaltsamen Lösen der Klemmvorrichtung aufrecht.

Eine selbsthemmende Klemmvorrichtung kann einen an der einen Backplatte schwenkbar gelagerten Klemmhebel mit einem seiner Schwenkachse zugewandten Klemmabschnitt und eine an der anderen Backplatte angeordnete Klemmfläche umfassen. Zum Festziehen der Klemmvorrichtung wird der Klemmhebel mit seinem Klemmabschnitt mit der Klemmfläche in einen kraftschlüssigen und selbsthemmenden Reibungseingriff gebracht und in diesem Reibungseingriff an der Klemmfläche entlang bewegt, bis das Bewegungsspiel des Klemmhebels beseitigt und die gewünschte Vorspannkraft durch die elastische Dehnung des Klemmhebels auf die beiden aufeinanderliegenden Backplatten aufgebracht ist.

Eine selbsthemmende Klemmvorrichtung kann ein als im wesentlichen C-förmige Klammer ausgebildetes Klemmelement, das mit einander zugewandten Klemmabschnitten an seinen Enden versehen ist, und zwei diesen Klemmabschnitten zugeordnete und von einander abgewandte Klemmflächen an den beiden Backplatten umfassen. Zum Festziehen der Klemmvorrichtung wird die Klammer mit ihren beiden Klemmabschnitten auf die diesen zugeordneten Klemmflächen der beiden Backplatten von außen aufgeschoben, mit diesen Klemmflächen in einen kraftschlüssigen und selbsthemmenden Reibungseingriff gebracht und in diesem Reibungseingriff an beiden Klemmflächen entlang bewegt, bis das zum Aufschieben erforderliche Bewegungsspiel der Klammer beseitigt und die gewünschte Vorspannkraft durch die elastische Dehnung der Klammer auf die beiden aufeinanderliegenden Backplatten aufgebracht ist.

Zwei übereinandergestapelte Backplatten können an zwei entgegengesetzten Stirnseiten jeweils durch zwei entlang der jeweiligen Stirnseite im Abstand voneinander angeordnete selbsthemmende Klemmvorrichtungen starr miteinander verbunden werden, die jeweils einen, an der einen Backplatte schwenkbar gelagerten Klemmhebel und eine diesem zugeordnete, an der anderen Backplatteneinheit angeordnete-Klemmfläche umfassen, an der jeweils der Klemmhebel der betreffenden Klemmvorrichtung mit seinem Klemmabschnitt im kraftschlüssigen und selbsthemmenden Reibungseingriff entlang geschwenkt werden kann, bis das Bewegungsspiel des Klemmhebels beseitigt und die gewünschte Vorspannkraft durch die elastische Dehnung des jeweiligen Klemmhebels auf die beiden aufeinanderliegenden Backplatten aufgebracht ist.+

Bei erfindungsgemäßen Backöfen, die mit beidseitig stapelbaren Backplatten ausgerüstet sind, werden die aus diesen Backplatten gebildeten auf- und zumachbaren Backformen in einem geschlossenen Kreislauf durch den jeweiligen Backofen transportiert. Diese Backformen bestehen jeweils aus einer oberen und einer unteren Backplatte und aus den diese beiden Backplatten starr miteinander verbindenden und an den beiden Backplatten angebrachten oder auf die beiden Backplatten von außen aufgesetzten Verriegelungsvorrichtungen bzw. selbsthemmenden Klemmvorrichtungen.

Bei jeder einzelnen Backform wird nach dem Beschicken ihrer unteren Backplatte mit Vorprodukt ihre obere Backplatte auf ihre untere Backplatte aufgesetzt und die beiden Backplatten mit Hilfe der jeweiligen Verriegelungsvorrichtung bzw. selbsthemmende Klemmvorrichtung zu einem starren Körper starr miteinander verbunden. Dieser starre Körper wird als geschlossene Backformeinheit durch den vertikalen Backschacht des Backofens transportiert und nach dem Passieren des vertikalen Backschachtes wieder in die beiden stapelbaren Backplatten aufgelöst, um von der unteren Backplatte der geöffneten Backform den gebackenen Formkörper abnehmen zu können.

Bei einem vertikalen Backschacht, der von einer vertikalen Transportstrecke für die geschlossenen Backformen durchsetzt wird, welche einen, an einem Ende fortlaufend neu gebildeten und am anderen Ende fortlaufend aufgelösten, vertikalen Stapel enthält, werden die als starre Körper ausgebildeten, geschlossenen Backformeinheiten an dem einen Ende dieses Stapels von der diesen Stapel erzeugenden Stapelvorrichtung des Backofens in diesen Stapel integriert und am anderen Ende dieses Stapels von der diesen Stapel auflösenden Vereinzelungsvorrichtung des Backofens aus diesem Stapel entfernt.

Innerhalb des Stapels liegen die Backformeinheiten mit den auf den Rückseiten ihrer Backplatten angeordneten und daher an ihrer Oberseite bzw. Unterseite liegenden Stapelflächen lose und nur durch ihr Eigengewicht aufeinander. Der vertikale Stapel besteht einerseits aus den mit ihren Oberseiten bzw. Unterseiten abwechselnd lose aufeinanderliegenden, geschlossenen Backformeinheiten und anderseits aus den im Stapel übereinander angeordneten, stapelbaren Backplatten, die paarweise mit den Stapelflächen ihrer Vorderseiten bzw. Rückseiten aufeinanderliegen. Die stapelbaren Backplatten sind innerhalb des Stapels an ihren aufeinanderliegenden Vorderseiten, innerhalb der jeweiligen geschlossenen Backformeinheit, starr miteinander verbunden und liegen mit ihren Rückseiten paarweise lose aufeinander.

Die als starre Körper ausgebildeten, geschlossenen Backformeinheiten wandern innerhalb des Stapels schrittweise von der Stapelvorrichtung zur Vereinzelungsvorrichtung und passieren dabei den vertikalen Backschacht, während in ihnen die Vorprodukte zu. Formkörpern gebacken werden und sie selbst mit ihren, ihre beiden Backplatten zu einem starren Körper verbindenden Verriegelungsvorrichtungen bzw.selbsthemmendenKlemmvorrichtungendemwährenddesBackprozesses in ihnen jeweils entstehenden Innendruck entgegenwirken.

Die Backformen können mit beim Schließen der Backformen durch die dafür vorgesehene Betätigungsvorrichtung des Backofens selbsttätig die beiden Backplatten starr miteinander verbindenden Verriegelungsvorrichtungen bzw. selbsthemmenden Klemmvorrichtungen versehen sein, die beim Auflösen der geschlossenen Backformeinheiten durch die dafür vorgesehene Betätigungsvorrichtung des Backofens aktiv gelöst werden, bevor die beiden Backplatten auseinander bewegt werden.

Die Backformen können mit beim Schließen der Backformen durch die dafür vorgesehene Betätigungsvorrichtung des Backofens von außen aktiv zu betätigenden, die beiden Backplatten starr miteinander verbindenden Verriegelungsvorrichtungen bzw. selbsthemmenden Klemmvorrichtungen versehen sein, die beim Auflösen der geschlossenen Backformeinheiten durch die dafür vorgesehene Betätigungsvorrichtung des Backofens von außen aktiv gelöst werden, bevor die beiden Backplatten auseinander bewegt werden.

Nachstehend wird die Erfindung an einigen Ausführungsbeispielen anhand der Zeichnungen näher erläutert.

### Kurze Beschreibung der Zeichnungen:

In den Zeichnungen zeigen:
Fig. 1 schematisch einen Backofen mit einer vorderen vertikalen Transportstrecke zur Herstellung von dünnwandigen Formkörpern im Schnitt,
Fig. 2 schematisch einen Backofen mit zwei gegenläufigen, vertikalen Transportstrecken zur Herstellung von dünnwandigen Formkörpern im Schnitt,
Fig. 3 schematisch einen Abschnitt einer, einen vertikalen Backschacht durchsetzten, vertikalen Transportstrecke zur Herstellung von dünnwandigen Formkörpern,
Fig. 4 einen Teil einer stapelbaren Backplatteneinheiten zur Herstellung von dünnwandigen Formkörpern im Querschnitt,
Fig. 5 den Teil der stapelbaren Backplatteneinheiten der Fig. 4 im Längsschnitt,
Fig. 6 eine Draufsicht auf den Teil der stapelbaren Backplatteneinheiten der Fig. 4,
Fig. 6a einen Abschnitt einer Dichtleiste der stapelbaren Backplatteneinheiten der Fig. 4 von der Seite,

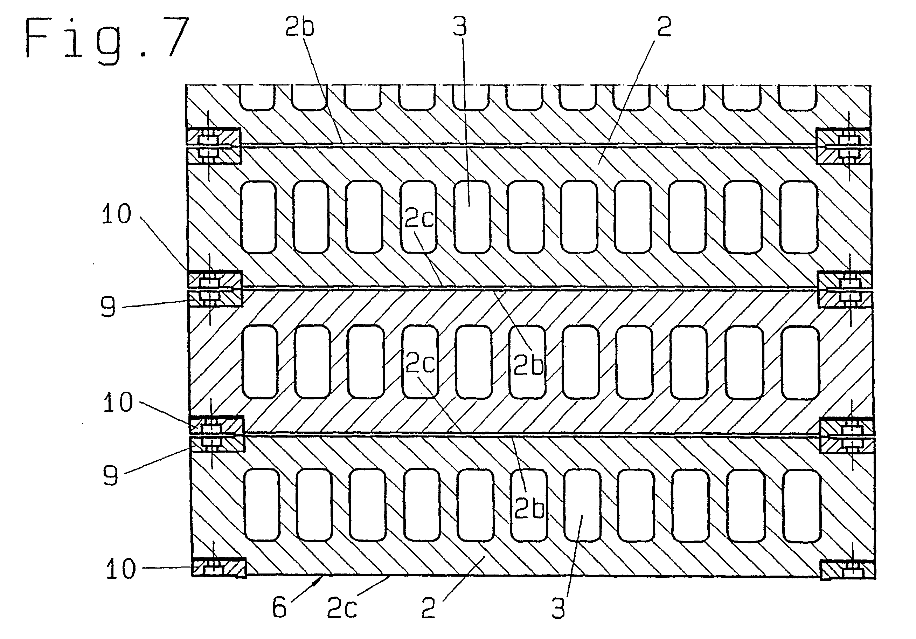

Fig. 7 einen Abschnitt eines, aus liegend übereinandergestapelten Backplatteneinheiten gebildeten, vertikalen Stapels, bei dem die Backplatteneinheiten innerhalb des Stapels lose aufeinanderliegen und nur durch das Gewicht zusammengehalten werden,
Fig. 8 einen Abschnitt eines, aus liegend übereinandergestapelten Backplatteneinheiten gebildeten, vertikalen Stapels, bei dem die Backplatteneinheiten innerhalb des Stapels paarweise durch jeweils an den Backplatteneinheiten angebrachte Verriegelungsvorrichtungen starr miteinander verbunden sind,
Fig. 9 einen Abschnitt eines, aus liegend übereinandergestapelten Backplatteneinheiten gebildeten, vertikalen Stapels, bei dem die Backplatteneinheiten innerhalb des Stapels jeweils durch von außen auf jeweils zwei benachbarte Backplatteneinheiten aufgesetzte selbsthemmende Klemmvorrichtungen starr miteinander verbunden sind,
Fig. 10 eine zwei übereinandergestapelte Backplatteneinheiten starr miteinander verbindende und an diesen angebrachte Verriegelungsvorrichtung im Querschnitt,
Fig. 11 einen Längsschnitt durch die Verriegelungsvorrichtung der Fig. 10,
Fig. 12 eine, am unteren Ende einer vertikalen Transportstrecke zur Herstellung von dünnwandigen Formkörpern angeordnete Haltevorrichtung für einen, aus stapelbaren Backplatteneinheiten gebildeten vertikalen Stapel von oben,
Fig. 13 die Haltevorrichtung der Fig. 12 von der Seite,
Fig. 14 einen Schnitt durch einen Backofen mit zwei gegenläufigen Transportstrecken zur Herstellung von dünnwandigen Formkörpern, die von ständig erneuerten Stapeln aus lose übereinanderliegenden, geschlossenen Backformeinheiten gebildet werden,
Fig. 15 einen Querschnitt durch eine geschlossene Backformeinheit, bei der die beiden, mit ihren Vorderseiten aufeinanderliegenden, stapelbaren Backplatten an einander entgegengesetzten Seiten jeweils durch eine an den beiden Backplatten angebrachte Verriegelungsvorrichtung starr miteinander verbunden sind,
Fig. 16 einen Querschnitt durch eine geschlossene Backformeinheit, bei der die beiden, mit ihren Vorderseiten aufeinanderliegenden, stapelbaren Backplatten an einander entgegengesetzten Seiten jeweils durch eine von außen auf beide Backplatten aufgesetzte selbsthemmende Klemmvorrichtungen starr miteinander verbunden sind,

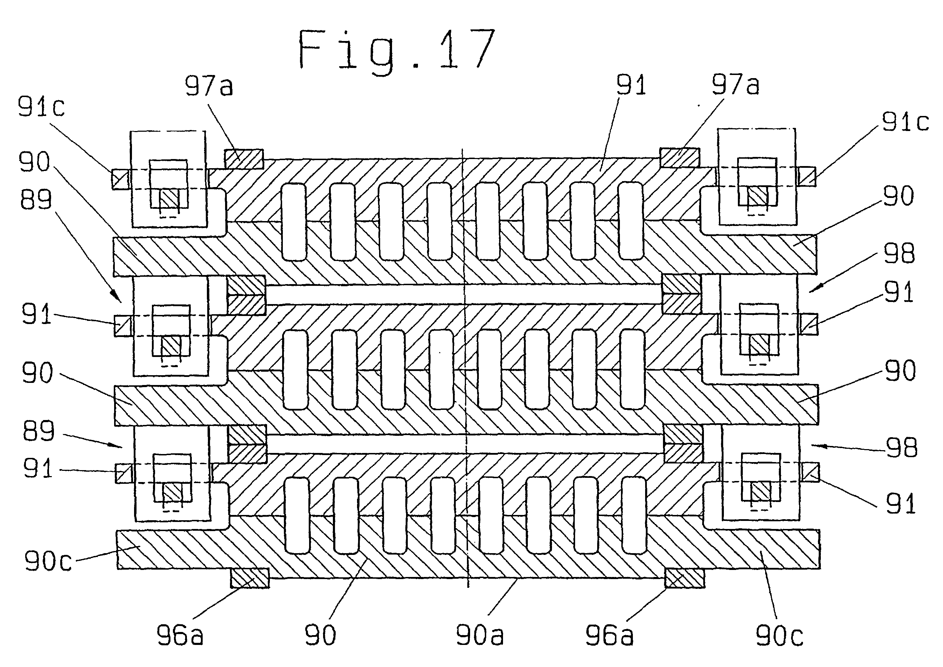

Fig. 17 einen Abschnitt eines vertikalen Stapels, der aus liegend übereinandergestapelten, geschlossenen Backformeinheiten besteht, deren stapelbare Backplatten durch ihre seitlichen Verriegelungsvorrichtungen starr miteinander verbunden sind,

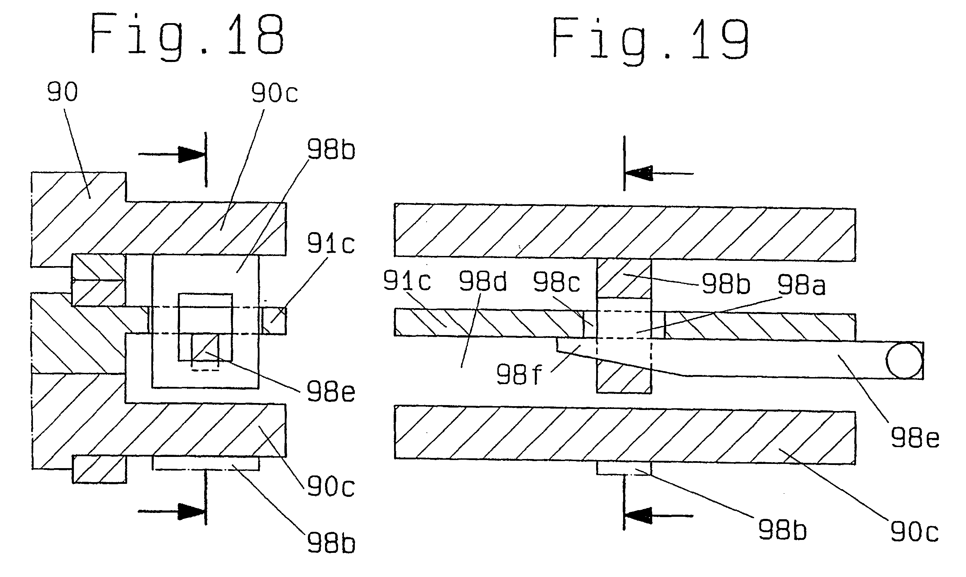

Fig. 18 eine seitliche Verriegelungsvorrichtung einer geschlossenen Backformeinheit im Querschnitt, und
Fig. 19 einen Längsschnitt durch die Verriegelungsvorrichtung der Fig. 18.

### Beschreibung von Ausführungsbeispielen:

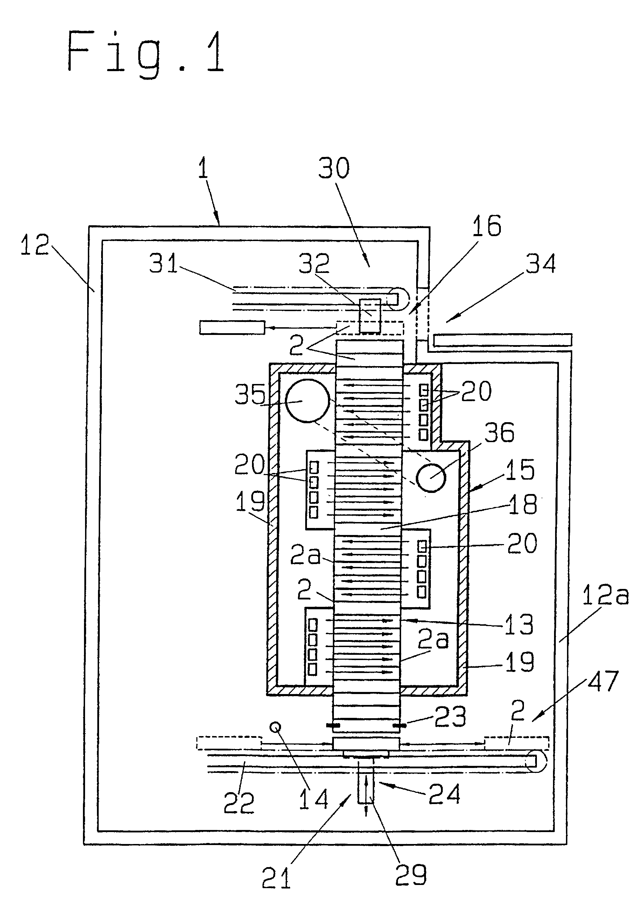

Fig. 1 zeigt einen mit Gas zu beheizenden Backofen 1 für die Herstellung von dünnwandigen Formkörpern, die beispielsweise als rechteckige ebene Blätter ausgebildet sind, die an ihren Ober- und Unterseiten jeweils ein von erhabenen Rippen gebildetes Waffelmuster tragen. Diese dünnwandigen Formkörper werden aus einer formlosen Masse in auf- und zumachbaren Backformen hergestellt, die jeweils aus zwei Formhälften bestehen, die die äußere Gestalt und die Wandstärke der dünnwandigen Formkörper bestimmen.

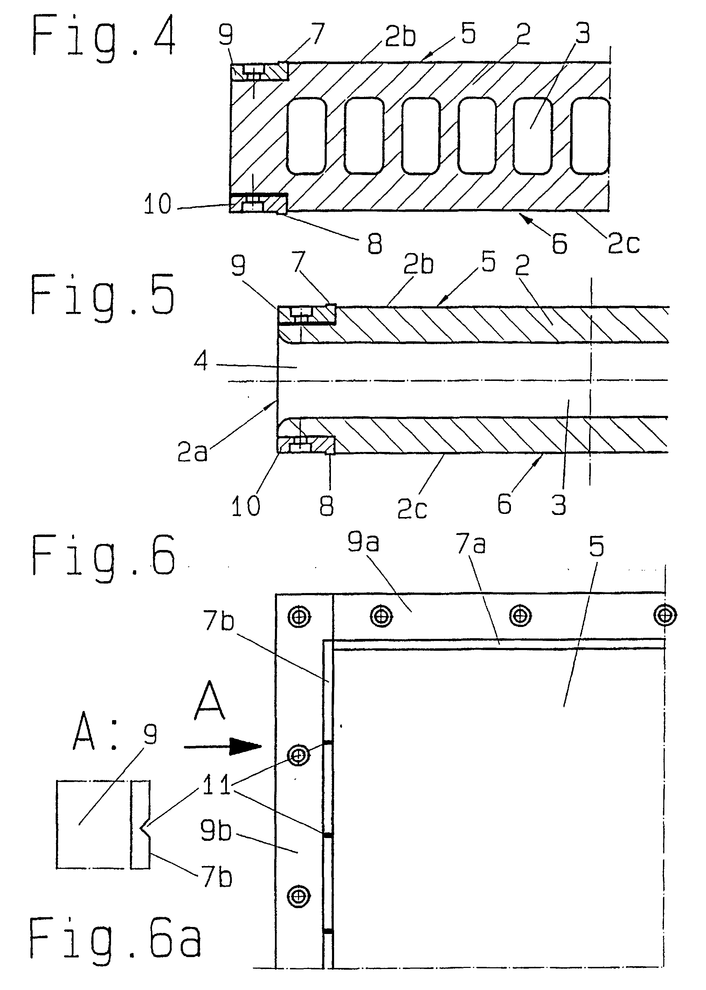

Zur Bildung der auf und zumachbaren Backformen sind beidseitig verwendbare, stapelbare Backplatteneinheiten 2 (Fig. 4 - 6a) vorgesehen, deren quaderförmige Plattenkörper von innen über Heizkanäle 3 beheizbar sind und an zwei einander gegenüberliegenden Stirnseiten 2a mit seitlichen Halteöffnungen 4 versehen sind und an den Oberseiten 2b und Unterseiten 2c mit Backflächen 5, 6 und diesen zugeordneten Stapelflächen 7, 8 tragen. Die Oberseiten 2b der Backplatteneinheiten 2 sind jeweils als untere Formhälften der Backformen und die Unterseiten 2c der Backplatteneinheiten 2 sind jeweils als obere Formhälften der Backformen ausgebildet. Zwei übereinandergestapelte Backplatteneinheiten 2 liegen mit ihren einander zugewandten Stapelflächen 7, 8 aufeinander und bilden zusammen eine geschlossene Backform für die jeweils herzustellenden dünnwandigen Formkörper. Diese Backform besteht aus der, an der Unterseite 2c der oberen Backplatteneinheit 2 angeordneten, oberen Backformhälfte und aus der, auf der Oberseite 2d der unteren Backplatteneinheit 2 angeordneten, unteren Backformhälfte.

Die beidseitig verwendbaren, stapelbaren Backplatteneinheiten 2 sind mit den in sie jeweils integrierten Backformhälften jeweils auf die Herstellung eines bestimmten dünnwandigen Formkörpers abgestellt.

Backplatteneinheiten 2 für die Herstellung von rechteckigen ebenen Blättern weisen jeweils einen im wesentlichen rechteckigen Plattenkörper auf. An der Oberseite 2b und an der Unterseite 2c des Plattenkörpers ist jeweils eine von seitlichen Dichtleisten 9, 10 begrenzte, im wesentlichen ebene, rechteckige Backfläche 5, 6 ausgebildet. Die Stapelflächen 7, 8 der Backplatteneinheit 2 sind in diese Dichtleisten 9, 10 integriert, die jeweils über die von ihnen begrenzte Backfläche 5, 6 vorstehen und zusammen mit dieser die obere Backformhälfte 5, 9 bzw. untere Backformhälfte 6, 10 der Backplatteneinheit 2 bilden. Bei der unteren Backformhälfte 5, 9 ist in zwei gegenüberliegenden Dichtleisten 9b jeweils zumindest ein die Dichtleiste 9b durchsetzender Dampfkanal 11 ausgebildet. Zwei übereinandergestapelte Backplatteneinheiten 2 liegen mit den Dichtleisten 9 und 10 ihrer einander zugewandten Backformhälften 5, 9 bzw. 6, 10 aufeinander und bilden eine geschlossene Backform, die bis auf die seitlichen Dampfkanäle 11, durch die die beim Backen in der Backform entstehenden Gase bei geschlossener Backform entweichen können, vollständig geschlossen ist.

Backplatteneinheiten für die Herstellung von runden, dreieckigen, fünfeckigen, oder fächerförmigen, ebenen Blättern können jeweils einen im wesentlichen rechteckigen Plattenkörper mit an seiner Oberseite und Unterseite angeordneten, runden, dreieckigen, fünfeckigen, oder fächerförmigen Backflächen aufweisen, die jeweils von seitlichen Dichtleisten begrenzt sind, in die die Stapelflächen der betreffenden Backplatteneinheit integriert sind. Diese Backplatteneinheiten können aber auch jeweils einen der Form der herzustellenden Blätter entsprechenden, quaderförmigen Plattenkörper mit rundem, dreieckigem, fünfeckigem; oder fächerförmigem Grundriß besitzen.

Backplatteneinheiten für die Herstellung von dünnwandigen Formkörpern, die als rechteckige, seichte nach oben offene Tasse ausgebildet sind, weisen einen, im wesentlichen rechteckigen Plattenkörper auf, der an seiner Oberseite eine, mit einer der Gestalt der Tasse entsprechenden Vertiefung versehene, obere Backfläche und an seiner Unterseite eine, mit einer der Gestalt der Tasse entsprechenden Erhebung versehene, untere Backfläche trägt. Beide Backflächen sind von seitlichen Dichtleisten begrenzt, die dem Umriß der Tasse entsprechen und die Stapelflächen der Backplatteneinheit enthalten.

Backplatteneinheiten für die Herstellung von dünnwandigen Formkörpern, die als ebene Blätter ohne genau definierte Ränder ausgebildet sind, weisen jeweils einen quaderförmigen Plattenkörper auf, an dessen Oberseite und Unterseite der jeweiligen Umrißform der herzustellenden ebenen Blätter entsprechende ebene Backflächen und außerhalb dieser die Wandstärke der Formkörper bestimmende Abstandshalter angeordnet sind, in die die oberen bzw. unteren Stapelflächen der Backplatteneinheit integriert sind.

In dem in Fig. 1 dargestellten Backofen 1 werden die beidseitig verwendbaren, stapelbaren Backplatteneinheiten 2 innerhalb der äußeren wärmeisolierenden Verkleidung 12 des Backofens 1 in einem in sich geschlossenen Kreislauf durch den Backofen 1 transportiert. Dieser Kreislauf umfaßt eine vordere, vertikal nach oben führende Transportstrecke 13, an deren Anfang die Backplatteneinheiten 2 zur Bildung von geschlossenen Backformen übereinandergestapelt werden und an deren Ende die Backplatteneinheiten 2 zur Auflösung der Backformen wieder vereinzelt werden. Die vordere vertikale Transportstrecke 13 führt von einer unteren Beschickungsstation 14 durch einen als vertikaler Backschacht 15 ausgebildeten Backraum zu einer oberen Entnahmestation 16. Von der Entnahmestation 16 werden die Backplatteneinheiten 2 an eine, in Fig. 1 nich näher dargestellte hintere, vertikal nach unten führende Transportstrecke übergeben und in dieser im miteinander verriegelten Zustand abgesenkt, bevor sie der vorderen, vertikal nach oben führende Transportstrecke 13 neuerlich zugeführt werden.

Die geschlossenen Backformen und die sie bildenden Backplatteneinheiten 2 werden in der vorderen vertikalen Transportstrecke 13 durch den sich fortlaufend erneuernden Stapel 18, der aus den lose aufeinanderliegenden und nur durch das Gewicht zusammengehaltenen Backplatteneinheiten 2 besteht, durch den Backschacht 15 hindurch nach oben transportiert.

Der Backschacht 15 wird innerhalb des Backofens 1 durch eine wärmeisolierende Hülle 19 nach außen begrenzt. Innerhalb des Backschachtes 15 sind entlang dem Stapel 18 Gasbrenner 20 vertikal übereinander angeordnet. Die von diesen erzeugten Heizgase strömen durch die Heizkanäle 4 der Backplatteneinheiten 2 hindurch durch den Stapel 18 und beheizen so die im Stapel 18 enthaltenen geschlossenen Backformen mit den in ihnen eingeschlossenen Vorprodukten.

Der Stapel 18 wird unterhalb des Backschachtes 15 durch eine Stapelvorrichtung 21 aus den einzelnen von einem unteren Horizontalförderer 22 zugeführten Backplatteneinheiten 2 fortlaufend neu gebildet. Die Stapelvorrichtung 21 besteht aus einer dem unteren Ende des Stapels 18 zugeordneten Haltevorrichtung 23 und einer unter dem Stapel angeordneten Hubvorrichtung 24.

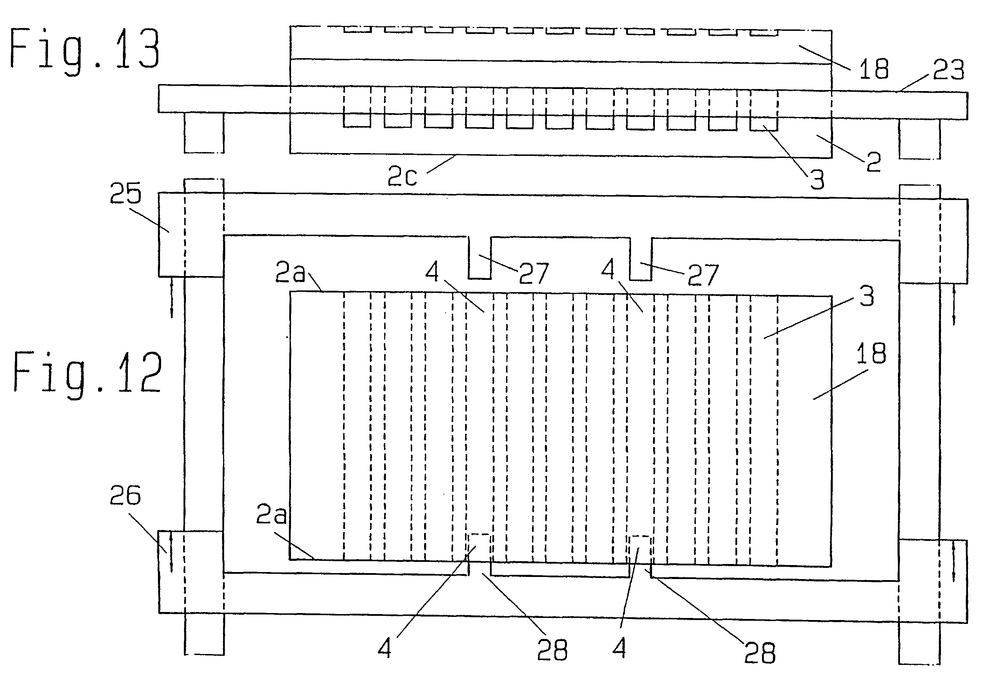

Die Haltevorrichtung 23 (Fig. 12, 13) steht mit der untersten Backplatteneinheit 2 des Stapels 18 im Eingriff, auf der das Gewicht des gesamten Stapels 18 ruht. Die Haltevorrichtung 23 umfaßt zwei Schlitten 25, 26, die in einer horizontalen Ebene einander gegenüberliegen. Diese Schlitten 25, 26 sind im Gestell des Backofens 1 vertikal abgestützt und tragen an ihren einander zugewandten Stirnseiten horizontale Haltebolzen 27, 28, die in die seitlichen Halteöffnungen 4 der untersten Backplatteneinheit 2 des Stapels 18 ragen und das Gewicht des gesamten Stapels 18 tragen. Während eines Stapelvorganges werden die beiden Schlitten 25, 26 zuerst zum Freigeben des Stapels 18 auseinandergezogen und dabei mit ihren Haltebolzen 27, 28 aus der untersten Backplatteneinheit 2 des Stapels 18 herausgezogen und dann zum Festhalten des Stapels 18 wieder zusammengeschoben und dabei mit ihren Haltebolzen 27, 28 in die Halteöffnungen 4 der neuen untersten Backplatteneinheit 2 des Stapels 18 hineingeschoben.

Die zu stapelnden Backplatteneinheiten 2 werden vom unteren Horizontalförderer 22 durch eine Beschickungsstation 14 transportiert, die der vertikalen Transportstrecke 13 und dem unteren Ende des Stapels 18 vorgelagert ist. Diese Beschickungsstation 14 kann beispielsweise als Aufgießstation ausgebildet sein, in der jeweils eine dosierte Menge eines als formlose Masse ausgebildeten Vorproduktes auf die Oberseite 2b der jeweiligen Backplatteneinheit 2 aufgegossen wird. Die an der Oberseite 2b mit Vorprodukt beschickte Backplatteneinheit 2 wird vom unteren Horizontalförderer 22 unter den Stapel 18 transportiert und dort von einem vertikal verfahrbaren Stempel 29 der Hubvorrichtung 24 vom unteren Horizontalförderer 22 abgehoben. Dieser Stempel 29 drückt die neu in den Stapel 18 zu integrierende Backplatteneinheit 2 von unten gegen die unterste Backplatteneinheit 2 des Stapels 18, übernimmt dessen gesamtes Gewicht und integriert damit diese Backplatteneinheit 2 als neue untersten Backplatteneinheit 2 in den Stapel 18. Nach dem Freigeben der bisherigen untersten Backplatteneinheit 2 des Stapels 18 durch die Haltevorrichtung 23 hebt der Stempel 29 der Hubvorrichtung 24 den gesamten Stapel 18 um die Höhe einer Backplatteneinheit 2 an. Anschließend wird die Haltevorrichtung 23 mit der neuen untersten Backplatteneinheit 2 des Stapels 18 in Eingriff gebracht und der Stapel 18 von der Hubvorrichtung 24 auf der Haltevorrichtung 23 abgesetzt.

Der Stapel 18 wird oberhalb des Backschachtes 15 durch eine Vereinzelungsvorrichtung 30 fortlaufend in einzelne Backplatteneinheiten 2 aufgelöst, welche einen von einem oberen Horizontalförderer 31 getragenen Greifkopf 32 umfaßt, der jeweils die oberste Backplatteneinheit 2 des Stapels 18 elektromagnetisch oder mechanisch ergreift, vom Stapel 18 abhebt und an die hintere, vertikal nach unten führende Transportstrecke weitergibt. Wenn der Greifkopf 32 die oberste Backplatteneinheit 2 vom Stapel 18 abhebt, wird die von dieser Backplatteneinheit 2 bisher nach oben begrenzte oberste Backform des Stapels 18 aufgelöst. Der in dieser Backform gebackene Formkörper bleibt auf der Oberseite der diese Backform bisher nach unten begrenzenden Backplatteneinheit 2 liegen. Letztere ist nunmehr die oberste Backplatteneinheit 2 des Stapels 18, deren Oberseite die Oberseite des Stapels 18 bildet.

Die im Stapel 18 gebackenen Formkörper werden in der Entnahmestation 16 jeweils von der Oberseite des Stapels 18 beispielsweise mittels eines (nicht dargestellten) Saugkopfes abgenommen und einer dem oberen Ende des Stapels 18 benachbarten Ausgabestation 34 zugeführt, in der sie aus dem Backofen 1 ausgegeben werden.

In dem vom Stapel 18 durchsetzten Backschacht 15 (Fig. 1) können die Gasbrenner 20 an zwei gegenüberliegenden Seiten des Stapels 18 abwechselnd gegeneinander versetzt vertikal übereinander angeordnet sein. Die auf einer Seite des Stapels 18 in die Heizkanäle 4 der Backplatteneinheiten 2 einströmenden Heizgase treten nach dem Durchströmen der Backplatteneinheiten 2 auf der gegenüberliegenden Seite des Stapels 18 in den Backschacht 15 aus. Die Heizgase verlassen den Backschacht 15 zusammen mit den aus den geschlossenen Backformen des Stapels 18 ausströmenden Backgasen durch zwei obere Abzugsöffnungen 35, 36. Die Gasbrenner 20 und die ihnen zugeordnete Abzugsöffnung 35 bzw. 36 des Backschachtes 15 sind auf verschiedenen Seiten des Stapels 18 angeordnet.

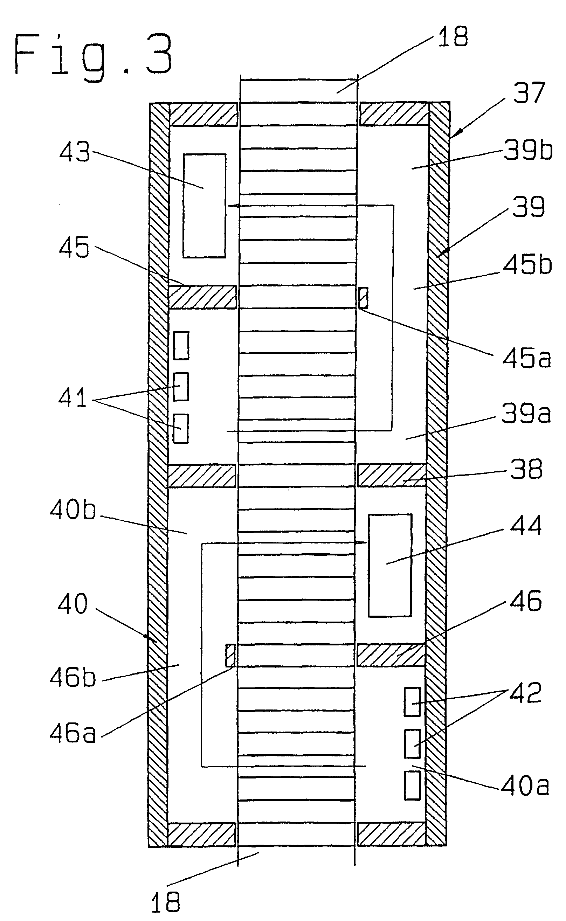

Gemäß einem alternativen Ausführungsbeispiel (Fig. 3) kann der Backschacht 37 durch eine horizontale Trennwand 38 in zwei übereinander angeordnete Teilschächte 39, 40 unterteilt sein, in denen die Gasbrenner 41, 42 und die ihnen zugeordnete Abzugsöffnung 43, 44 jeweils auf der gleichen Seite des Stapels 18 vertikal übereinander angeordnet sind. Jeder Teilschacht 39, 40 enthält eine untere Heizzone 39a bzw. 40a, in der die Gasbrenner 41 bzw. 42 angeordnet sind, und eine obere Heizzone 39b bzw. 40b, in der eine Abzugsöffnung 43 bzw. 44 des Backschachtes 39 bzw. 40 angeordnet ist. Die Gasbrenner 41 bzw. 42 und die Abzugsöffnung 43 bzw. 44 werden jeweils durch einen horizontalen Zwischenboden 45 bzw. 46 voneinander getrennt, in dem eine mittige Durchtrittsöffnung 45a bzw. 46a für den Durchtritt des Stapels 18 und eine seitliche Bodenöffnung 45b bzw. 46b für den Durchtritt der Heizgase und Backgase von der unteren Heizzone 39a bzw. 40a in die obere Heizzone 39b bzw. 40b ausgebildet ist.

Der unterhalb des Backschachtes 15 angeordnete, untere Horizontalförderer 22 erstreckt sich über das untere Ende des Stapels 18 hinaus bis zu einer dem Stapel 18 benachbarten, in Fig. 1 rechts dargestellten Seitenwand 12a des Backofens 1 benachbarten Ausgabestation 47 für die stapelbaren Backplatteneinheiten 2, der eine (nicht dargestellte) Wartungstüre in der Seitenwand 12a des Backofens 1 zugeordnet ist.

Über die Ausgabestation 47 für die stapelbaren Backplatteneinheiten 2 kann eine Backplatteneinheit 2, die von der vertikal nach unten führenden Transportstrecke an den unteren Horizontalförderer 22 übergeben wurde, vom unteren Horizontalförderer 22 am unteren Ende des Stapels 18 vorbei zur Ausgabestation 47 befördert und dort aus dem Backofen 1 ausgegeben werden. Nach der Reinigung bzw. Wartung der Backplatteneinheit 2 kann diese über die Ausgabestation 47 wieder in den Backofen 1 eingegeben und vom unteren Horizontalförderer 22 der Stapelvorrichtung 21 zugeführt werden, ohne den Backofen 1 oder Teile des Backofens 1 demontieren oder zerlegen zu müssen.

Die Ausgabestation 47 für die stapelbaren Backplatteneinheiten 2 erlaubt es, die Backplatteneinheiten 2 des Backofens 1 einzeln über die Ausgabestation 47 gegen andere Backplatteneinheiten 2 auszutauschen und dadurch den Backofen 1 auf die Herstellung eines anderen dünnwandigen Formkörpers umzurüsten. So können beispielsweise für die Herstellung von ebenen Blättern vorgesehene, stapelbare Backplatteneinheiten 2 gegen für die Herstellung von seichten Tassen vorgesehene, stapelbare Backplatteneinheiten 2 ausgetauscht werden.

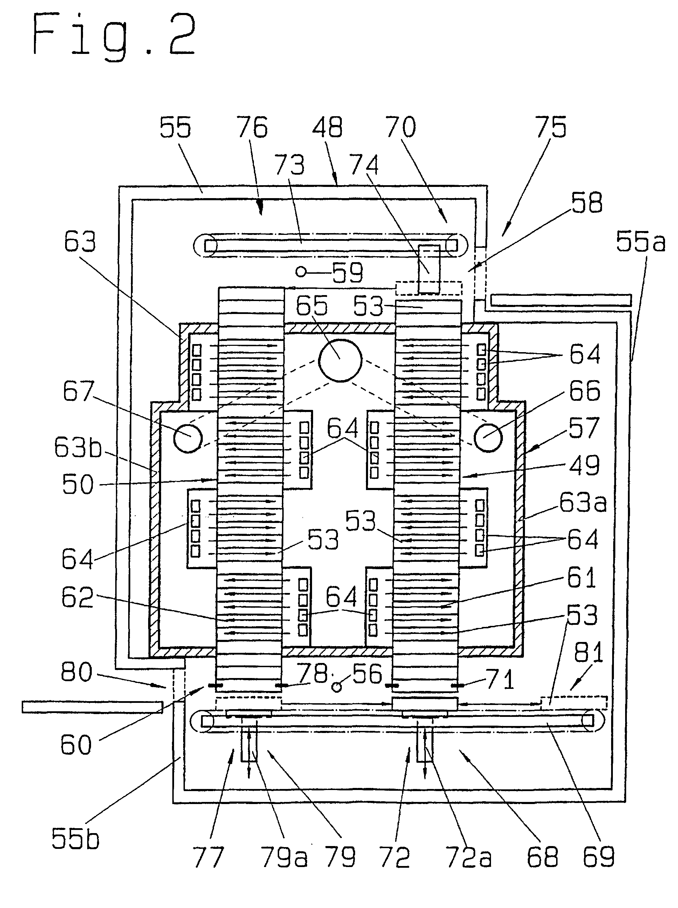

Fig. 2 zeigt einen mit Gas zu beheizenden Backofen 48 mit zwei gegenläufigen, vertikalen Transportstrecken 49, 50 zur Herstellung von dünnwandigen Formkörpern, die in auf- und zumachbaren Backformen hergestellt werden, die jeweils aus zwei Formhälften bestehen, die die äußere Gestalt und die Wandstärke der dünnwandigen Formkörper bestimmen.

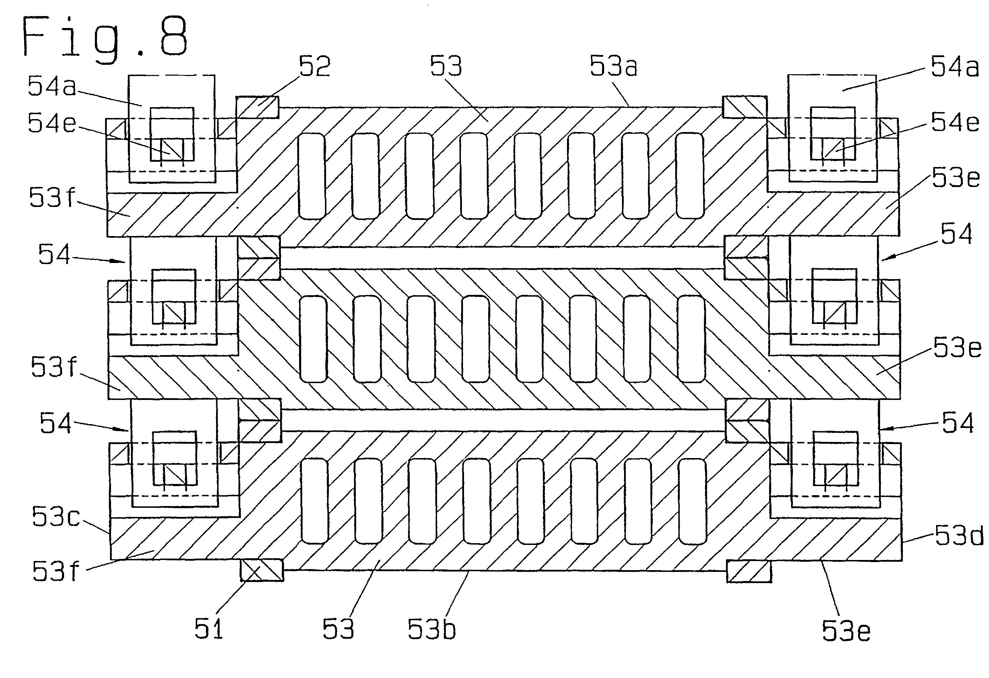

Zur Bildung der auf- und zumachbaren Backformen (Fig. 8) sind auf ihren oberen bzw. unteren Stapelflächen 51 bzw. 52 stapelbare und seitlich paarweise starr miteinander verbindbare Backplatteneinheiten 53 vorgesehen, die von innen über Heizkanäle beheizt werden und an ihren Oberseiten 53a jeweils als untere Backformhälften und an ihren Unterseiten 53b jeweils als obere Backformhälften ausgebildet sind. Diese Backplatteneinheiten 53 entsprechen im wesentlichen den im Zusammenhang mit dem Backofen 1 der Fig. 1 beschriebenen Backplatteneinheiten 2 und sind zusätzlich an zwei einander gegenüberliegenden Stirnseiten 53c bzw. 53d mit verriegelbaren und wieder lösbaren Verriegelungsvorrichtungen 54 zum starren Verbinden zweier mit ihren Stapelflächen 51, 52 aufeinanderliegender Backplatteneinheiten 53 versehen.

Die stapelbaren und paarweise starr miteinander verbindbaren Backplatteneinheiten 53 werden in dem in Fig. 2 dargestellten 48 Backofen innerhalb der äußeren wärmeisolierenden Verkleidung 55 des Backofens 48 in einem in sich geschlossenen Kreislauf durch den Backofen 48 transportiert. Dieser Kreislauf umfaßt eine erste vertikal nach oben führende Transportstrecke 49, an deren unterem Anfang die Backplatteneinheiten 53 zur Bildung von geschlossenen Backformen übereinandergestapelt werden und an deren oberem Ende die Backplatteneinheiten 53 zur Auflösung der Backformen wieder vereinzelt werden. Diese erste vertikale Transportstrecke 49 für die geschlossenen Backformen führt von einer unteren Beschickungsstation 56 durch einen vertikalen Backschacht 57 zu einer oberen Entnahmestation 58. Von der oberen Entnahmestation 58 werden die vereinzelten Backplatteneinheiten 53 an eine zur ersten Transportstrecke 49 gegenläufige, vertikal nach unten führende zweite Transportstrecke 50 übergeben, an deren oberem Anfang die Backplatteneinheiten 53 zur Bildung von geschlossenen Backformen neuerlich übereinandergestapelt werden und an deren unterem Ende die Backplatteneinheiten 53 zur Auflösung der Backformen wieder vereinzelt werden. Diese zweite vertikale Transportstrecke 50 für die geschlossenen Backformen führt von einer oberen Beschickungsstation 59 durch den vertikalen Backschacht 57 zu einer unteren Entnahmestation 60. Von der unteren Entnahmestation 60 werden die vereinzelten Backplatteneinheiten 53 zurück zur ersten vertikal nach oben führenden Transportstrecke 49 transportiert.

Die beiden gegenläufigen vertikalen Transportstrecken 49, 50 und ihre sich fortlaufend erneuernden, jeweils aus aufeinanderliegenden Backplatteneinheiten 53 bestehenden Stapel 61, 62 sind im Backofen 48 nebeneinander angeordnet und durchsetzen jeweils den vertikalen Backschacht 57. In Fig. 2 ist die vertikal nach oben führende, erste Transportstrecke 49 mit dem ersten Stapel 61 des Backofens rechts dargestellt und die vertikal nach unten führende, zweite Transportstrecke 50 mit dem zweiten Stapel 62 des Backofens links dargestellt.

In den beiden Transportstrecken 49, 50 werden die geschlossenen Backformen und die sie bildenden Backplatteneinheiten 53 durch den jeweiligen, sich fortlaufend erneuernden Stapel 61 bzw. 62 in entgegengesetzter Richtung durch den Backschacht 57 transportiert. Der Backschacht 57 wird innerhalb des Backofens 48 durch eine wärmeisolierende Hülle 63 nach außen begrenzt. Innerhalb des Backschachtes 57 sind entlang der beiden Stapel 61, 62 Gasbrenner 64 vertikal übereinander angeordnet. Die Gasbrenner 64 sind bei jedem Stapel 61 bzw. 62 abwechselnd an gegenüberliegenden Seiten des Stapels 61, 62 angeordnet. Die von diesen erzeugten Heizgase strömen durch die Heizkanäle 54 der Backplatteneinheiten 53 hindurch durch den jeweiligen Stapel 61 bzw. 62 und beheizen so die im jeweiligen Stapel 61 bzw. 62 enthaltenen geschlossenen Backformen mit den in ihnen eingeschlossenen Vorprodukten. An der Rückwand des Backschachtes 57 sind eine mittlere Abzugsöffnung 65 und zwei seitliche Abzugsöffnungen 66, 67 vorgesehen, durch die die aus den Heizkanälen 54 der Backplatteneinheiten 53 austretenden Heizgase und die aus den zwischen den Backplatteneinheiten 53 liegenden, geschlossenen Backformen austretenden Backgase dem Backschacht 57 verlassen. Die mittlere Abzugsöffnung 65 ist zwischen den beiden Stapeln 61, 62 angeordnet und zwischen einer Seitenwand 63a bzw. 63b des Backschachtes 57 und dem dieser benachbarten Stapel 61 bzw. 62 ist jeweils eine seitliche Abzugsöffnung 66 bzw. 67 angeordnet.

Der erste Stapel 61 wird unterhalb des Backschachtes 57 durch eine untere Stapelvorrichtung 68 aus den einzelnen von einem unteren Horizontalförderer 69 zugeführten Backplatteneinheiten 53 fortlaufend neu gebildet und oberhalb des Backschachtes 57 durch eine obere Vereinzelungsvorrichtung 70 fortlaufend wieder in einzelne Backplatteneinheiten 53 aufgelöst. Die untere Stapelvorrichtung 68 entspricht der Stapelvorrichtung 24 des Backofens 1 der Fig. 1 und sieht, so wie diese, eine dem unteren Ende des ersten Stapels 61 zugeordneten Haltevorrichtung 71 zum Halten des ersten Stapels 61 und eine unter dem ersten Stapel 61 angeordnete Hubvorrichtung 72 zum Anheben der in den ersten Stapel 61 von unten zu integrierenden Backplatteneinheit 53 und zum Anheben des gesamten ersten Stapels 61 vor. Die obere Vereinzelungsvorrichtung 70 sieht einen von einem oberen Horizontalförderer 73 des Backofens 48 getragenen Greifkopf 74 vor, der jeweils die oberste Backplatteneinheit 53 des ersten Stapels 61 von diesem abhebt und zum oberen Anfang der vertikal nach unten führenden zweiten Transportstrecke 50 transportiert.

In der ersten Transportstrecke 49 werden aus den in der unteren Beschickungsstation 56 des Backofens 48 jeweils auf die Oberseite 53a der stapelbaren Backplatteneinheiten 53 aufgebrachten Vorprodukten in den den ersten Stapel 61 durchlaufenden Backformen jeweils Formkörper gebacken, die in der oberen Entnahmestation 58 des Backofens 48 von der Oberseite des ersten Stapels 61 beispielsweise mittels eines (nicht dargestellten) Saugkopfes jeweils abgenommen werden und einer dem oberen Ende des ersten Stapels 61 benachbarten oberen Ausgabestation 75 zugeführt werden, in der die im ersten Stapel 61 gebackenen Formkörper aus dem Backofen 48 ausgegeben werden.

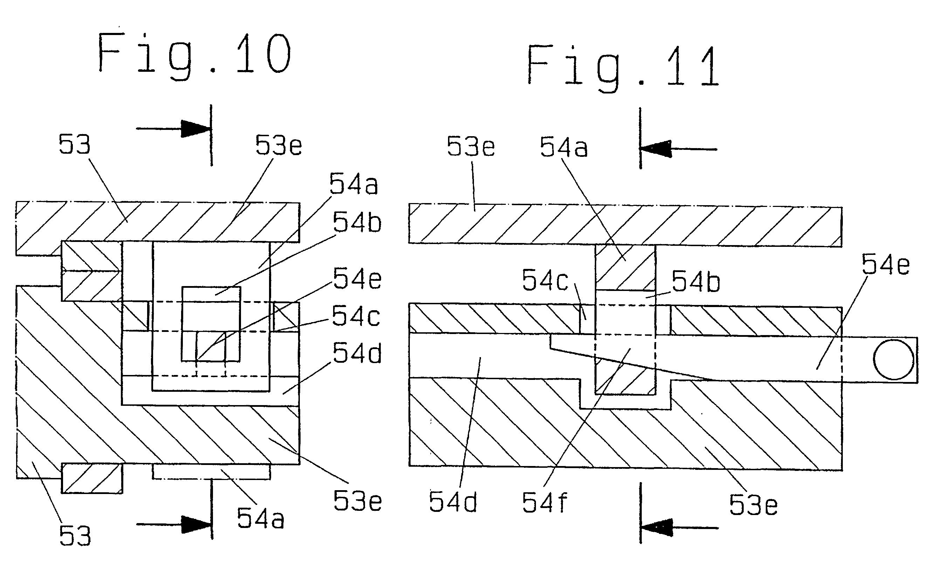

Der zweite Stapel 62 wird oberhalb des Backschachtes 57 durch eine obere Stapelvorrichtung 76 aus den beim ersten Stapel 61 vereinzelten Backplatteneinheiten 53 fortlaufend neu gebildet und unterhalb des Backschachtes 57 durch eine untere Vereinzelungsvorrichtung 77 fortlaufend wieder in einzelne Backplatteneinheiten 53 aufgelöst. Am oberen Ende des zweiten Stapels 62 wird die Oberseite seiner obersten Backplatteneinheit 53 von der oberen Beschickungsstation 59 der zweiten Transportstrecke 50 mit Vorprodukt beschickt. Anschließend wird eine vom ersten Stapel 61 abgenommene Backplatterieinhei 53 vom Greifkopf 74 des oberen Horizontalförderers 73 als neue Backplatteneinheit 53 von oben auf die oberste Backplatteneinheit 53 des zweiten Stapels 62 aufsetzt und mit dieser durch Verriegeln der den beiden aufeinanderliegenden Backplatterieinheite 53 gemeinsamen seitlichen Verriegelungsvorrichtungen 54 (Fig. 8 - 11) starr verbunden. Die benachbarte Backplatteneinheiten 53 starr miteinander verbindenden Verriegelungsvorrichtungen 54 werden gelöst, bevor die betreffenden Backplatteneinheiten 53 das untere Ende des zweiten Stapels 62 erreicht haben und dort durch die untere Vereinzelungsvorrichtung 77 vereinzelt und auf dem unteren Horizontalförderer 69 abgelegt werden, der die einzelnen Backplatteneinheiten 53 der unteren Beschickungsstation 56 der ersten Transportstrecke 49 zuführt. Die untere Vereinzelungsvorrichtung 77 sieht eine dem unteren Ende des zweiten Stapels 62 zugeordnete Haltevorrichtung 78 zum Halten des zweiten Stapels 62 und eine unter dem zweiten Stapel 62 angeordnete Hubvorrichtung 79 zum Absenken des gesamten zweiten Stapels 62 und zum Absenken der vom zweiten Stapel 62 nach unten vereinzelten Backplatteneinheit 53 vor.

In der zweiten Transportstrecke 50 werden aus den in der oberen Beschickungsstation 59 des Backofens 48 jeweils auf die Oberseite 52a der stapelbaren Backplatteneinheiten 53 aufgebrachten Vorprodukten in den den zweiten Stapel 62 durchlaufenden Backformen jeweils Formkörper gebacken, die in der unteren Entnahmestation 60 des Backofens 48 von der Oberseite 53a der auf dem unteren Horizontalförderer 69 jeweils abgelegten Backplatteneinheit 53 beispielsweise mittels eines (nicht dargestellten) Saugkopfes abgenommen werden und einer dem unteren Ende des zweiten Stapels 62 benachbarten unteren Ausgabestation 80 zugeführt werden, in der die im zweiten Stapel 62 gebackenen Formkörper aus dem Backofen 48 ausgegeben werden.

Der obere Horizontalförderer 73 des Backofens 48 ist mit seinem Greifkopf 74 sowohl ein Teil der oberen Vereinzelungsvorrichtung 70 der ersten Transportstrecke 49 als auch Teil der oberen Stapelvorrichtung 76 der zweiten Transportstrecke 50.

Der unterhalb des Backschachtes 57 angeordnete, untere Horizontalförderer 69 erstreckt sich seitlich über die unteren Enden der beiden Stapel 61, 62 hinaus bis zu der dem jeweiligen Stapel 61 bzw. 62 benachbarten Seitenwand 55a bzw. 55b des Backofens 48. Beim zweiten Stapel 62 erstreckt sich der untere Horizontalförderer 69 bis zur Ausgabestation 80 für die im zweiten Stapel 62 gebackenen Formkörper. Beim ersten Stapel 61 erstreckt sich der untere Horizontalförderer 69 bis zu einer Ausgabestation 81 für die stapelbaren Backplatteneinheiten 53, der eine (nicht dargestellte) Wartungstüre in der Seitenwand 55a des Backofens 48 zugeordnet ist.

Die Ausgabestation 81 für die stapelbaren Backplatteneinheiten 53 ermöglicht es, eine Backplatteneinheit 53, die am unteren Ende des zweiten Stapels 62 von der unteren Vereinzelungsvorrichtung 77 auf dem unteren Horizontalförderer 69 abgesetzt wurde, mittels des unteren Horizontalförderers 69 an den unteren Enden beider Stapel 61, 62 vorbei zur Ausgabestation 81 zu transportieren und über diese aus dem Backofen 48 auszugeben. Nach der Reinigung oder Wartung der Backplatteneinheit 53 kann diese über die Ausgabestation 81 für die stapelbaren Backplatteneinheiten 53 wieder in den Backofen 48 eingegeben werden und vom unteren Horizontalförderer 69 der unteren Stapelvorrichtung 68 des ersten Stapels 61 zugeführt werden. Die Ausgabestation 81 für die stapelbaren Backplatteneinheiten 53 erlaubt es, die Backplatteneinheiten 53 des Backofens einzeln gegen andere Backplatteneinheiten 53 auszutauschen und dadurch den Backofen 48 auf die Herstellung eines anderen dünnwandigen Formkörpers umzurüsten, ohne den Backofen 48 oder Teile des Backofens 48 demontieren oder zerlegen zu müssen. So können beispielsweise stapelbare Backplatteneinheiten 53 für die Herstellung von ebenen Blättern gegen solche für die Herstellung von seichten Tassen oder niedrigen Bechern ausgetauscht werden.

Die stapelbaren Backplatteneinheiten 53 des Backofens 48 der Fig. 2 tragen an zwei einander entgegengesetzten Stirnseiten 53c bzw. 53d (Fig. 8, 10, 11) jeweils seitlich vorstehende Verriegelungsabschnitte 53e bzw. 53f, die bei übereinandergestapelten Backplatteneinheiten 53 auf einander gegenseitig ausgerichtet übereinanderliegen. Jeder Verriegelungsabschnitt 53e bzw. 53f einer Backplatteneinheit 53 trägt an seiner Oberseite den Unterteil einer Verriegelungsvorrichtung 54 zum Verriegeln der von der Oberseite 53a der Backplatteneinheit 53 begrenzten Backform und an seiner Unterseite den Oberteil einer Verriegelungsvorrichtung 54 zum Verriegeln der von der Unterseite 53b der Backplatteneinheit 53 begrenzten Backform. Der Oberteil sieht eine von der Unterseite des jeweiligen Verriegelungsabschnittes 53e bzw. 53f vertikal nach unten vorstehende, rechteckige Öse 54a mit horizontalem Loch 54b vor. Der Unterteil sieht an der Oberseite des jeweiligen Verriegelungsabschnittes 53e bzw. 53f einen, nach oben offenen vertikalen Aufnahmeschlitz 54c für die Öse 54a vor und im Inneren des Verriegelungsabschnittes 53e bzw. 53f einen quer zur Öse 54a verlaufenden seitlich offenen Arbeitsschlitz 54d, in dem ein horizontal verschiebbarer Bolzen 54e mit keilförmiger Spitze 54f aufgenommen ist. Beim Übereinanderstapeln zweier Backplatteneinheiten 53 wird bei jeder Verriegelungsvorrichtung 54 die am Verriegelungsabschnitt 53e bzw. 53f der oberen Backplatteneinheit 53 angebrachte Öse 54a in den am Verriegelungsabschnitt 53e bzw. 53f der unteren Backplatteneinheit 53 ausgebildeten Aufnahmeschlitz 54c eingeschoben. Zum starren Verbinden der beiden Backplatteneinheiten 53 muß dann nur mehr der Bolzen 54e mit seiner keilförmigen Spitze 54f durch eine äußere (nicht dargestellte) Betätigungsvorrichtung in die Öse 54a eingeschoben werden, bis die obere Backplatteneinheit 53 an der unteren Backplatteneinheit 53 festgezogen ist. (Fig. 8, 10 und 11)

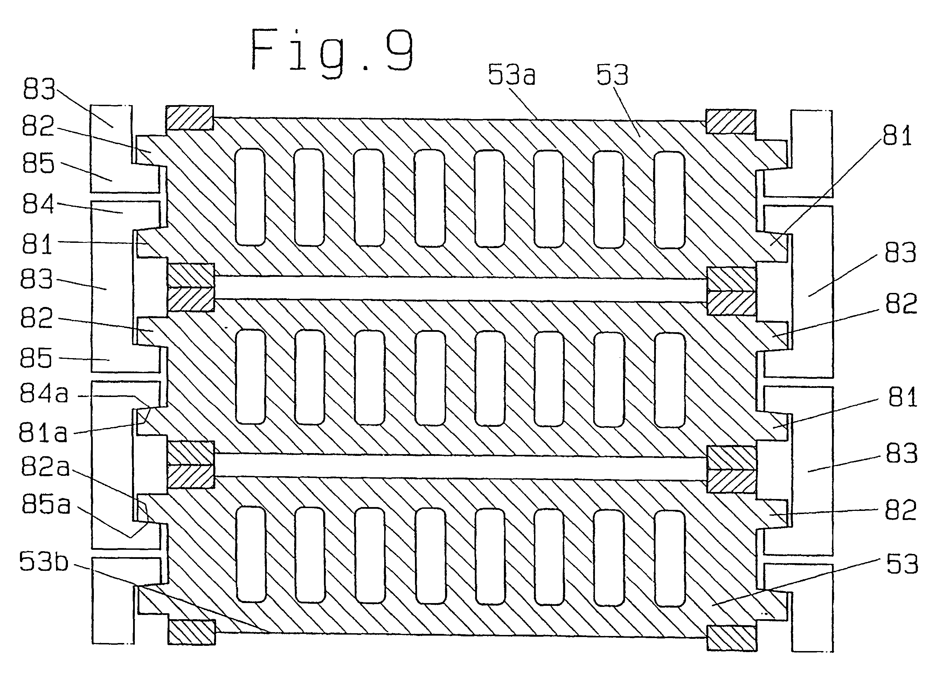

Die stapelbaren Backplatteneinheiten 53 können an den beiden einander entgegengesetzten Stirnseiten auch jeweils mit ihrer Oberseite 53a zugeordneten oberen Verriegelungsabschnitten 81 und ihrer Unterseite 53b zugeordneten unteren Verriegelungsabschnitten 82 versehen sein. Die oberen Verriegelungsabschnitte 81 sind an ihren Unterseiten mit unteren Eingriffsflächen 81a für eine selbsthemmende Klemmvorrichtung versehen und die unteren Verriegelungsabschnitte 82 sind an ihren Oberseiten mit oberen Eingriffsflächen 82a für eine selbsthemmende Klemmvorrichtung versehen. Beim Übereinanderstapeln zweier Backplatteneinheiten 53 liegen die unteren Verriegelungsabschnitte 82 der oberen Backplatteneinheit 53 über den oberen Verriegelungsabschnitten 81 der unteren Backplatteneinheit 53. Zum starren Verbinden der beiden Backplatteneinheiten 53 werden als im wesentlichen C-förmige Klammern 83 ausgebildete, selbsthemmende Klemmvorrichtungen auf die übereinander angeordneten Verriegelungsabschnitte 81, 82 der beiden Backplatteneinheiten 53 aufgeschoben. Jede Klammer 83 wird mit den an ihren Enden 84, 85 ausgebildeten, einander zugewandten Klemmabschnitten 84a, 85a von außen gleichzeitig auf die obere Eingriffsfläche 82a des unteren Verriegelungsabschnittes 82 der oberen Backplatteneinheit 53 und auf die untere Eingriffsfläche 81a des oberen Verriegelungsabschnittes 81 der unteren Backplatteneinheit 53 aufgeschoben. Die einander zugewandten Klemmabschnitte 84a, 85a der Klammer 83 und die beiden von einander abgewandten Eingriffsflächen 81a, 82a der einander zugeordneten Verriegelungsabschnitte 81, 82 der aufeinanderliegenden Backplatteneinheiten 53 bilden miteinander einen kraftschlüssigen und selbsthemmenden Reibungseingriff. Die Klammer 83 wird mit ihren Klemmabschnitten 84a bzw. 85a in diesem kraftschlüssigen und selbsthemmenden Reibungseingriff an beiden Eingriffsflächen 82a bzw. 81a der Verriegelungsabschnitte 82 und 81 entlang bewegt, bis zuerst das zum Aufschieben der Klammer 83 erforderliche Bewegungsspiel beseitigt ist und dann eine gewünschte Vorspannkraft durch die elastische Dehnung der Klammer 83 auf die beiden aufeinanderliegenden Backplatteneinheiten 53 aufgebracht ist. (Fig. 9)

In dem Backofen 48 der Fig. 2 werden die dünnwandigen Formkörper in auf- und zumachbaren Backformen hergestellt, die von stapelbaren Backplatteneinheiten 53 gebildet werden, die an Ober- und Unterseiten als Backformhälften ausgebildet sind und durch Verriegelungsvorrichtungen 54 oder Klemmvorrichtungen 83 paarweise starr miteinander verbundenen werden können. Diese Backplatteneinheiten 53 durchlaufen in zwei gegenläufigen, vertikalen Transportstrecken 49, 50 jeweils einen sich fortlaufend erneuernden Stapel 61, 62, in dem die von den Backplatteneinheiten 53 jeweils paarweise gebildeten geschlossenen Backformen durch den vertikalen Backschacht 57 transportiert werden, während die Backplatteneinheiten 53 am Anfang des Stapels 61 bzw. 62 übereinandergestapelt und am Ende des Stapel 61 bzw. 62 wieder vereinzelt werden. Jeder Stapel 61 bzw. 62 wird an seinem unteren Ende durch eine Haltevorrichtung 71 bzw. 78 gehalten und durch eine unter ihm angeordnete Hubvorrichtung 72 bzw. 79 angehoben und wieder abgesenkt, während an seinem unteren Ende eine neue Backplatteneinheit 53 angefügt bzw. die unterste Backplatteneinheit 53 entfernt wird. Am obere Ende des jeweiligen Stapels 61 bzw. 62 kann das Anfügen einer neuen Backplatteneinheit 53 bzw. das Entfernen der obersten Backplatteneinheit 53 jeweils bei angehobenem oder bei abgesenktem Stapel 61 bzw. 62 vorgenommen werden. Die Hubbewegung und die Absenkbewegung des jeweiligen Stapels 61 bzw. 62 kann an seinem oberen Ende auch zum Anfügen einer neuen Backplatteneinheit 53 bzw. zum Entfernen der obersten Backplatteneinheit 53 verwendet werden.

Der, die im Backofen 48 vertikal nach oben führende Transportstrecke 49 bildende, erste Stapel 61 besteht aus aufeinanderliegenden Backplatteneinheiten 53, die an seinem unteren Ende durch aufeinanderfolgende Stapelvorgänge der unteren Stapelvorrichtung 68 nacheinander in den ersten Stapel 61 integriert und nach dem Durchwandern des ersten Stapels 61 und des Backschachtes 57 am oberen Ende des ersten Stapels 61 durch die obere Vereinzelungsvorrichtung 70 nacheinander vom ersten Stapel 61 wieder abgenommen werden.

Bei jedem Stapelvorgang wird eine, auf ihrer Oberseite 53a mit Vorprodukt bereits beschickte, neue Backplatteneinheit 53 von unten in den ersten Stapel 61 integriert. Die neue Backplatteneinheit 53 wird vom unteren Horizontalförderer 69 unter das untere Ende des ersten Stapels 61 transportiert und durch den Stempel 72a der unterhalb angeordneten Hubvorrichtung 72 vom unteren Horizontalförderer 69 abgehoben, zum unteren Ende des ersten Stapels 61 hin angehoben und mit der Oberseite 53a gegen die Unterseite des ersten Stapels 61 gedrückt. Anschließend wird die neue Backplatteneinheit 53 samt dem auf ihr lastenden ersten Stapel 61 durch den Stempel 72a der Hubvorrichtung 72 weiter angehoben und der erste Stapel 61 mit seiner bisherigen untersten Backplatteneinheit 53 von den horizontalen Haltebolzen der ihm zugeordneten Haltevorrichtung 71 abgehoben. Die Haltebolzen werden durch das horizontale Auseinanderfahren der sie tragenden Schlitten aus der bisherigen untersten Backplatteneinheit 53 des ersten Stapels 61 herausgezogen. Der erste Stapel 61 wird vom Stempel 72a der Hubvorrichtung 72 weiter angehoben bis die seitlichen Halteöffnungen der neuen und nunmehr untersten Backplatteneinheit 53 des ersten Stapels 61 auf die horizontalen Haltebolzen der Haltevorrichtung 71 ausgerichtet sind. Jetzt werden die beiden Schlitten der Haltevorrichtung 71 zusammengeschoben und die Haltebolzen in die Halteöffnungen der neuen untersten Backplatteneinheit 53 des ersten Stapels 61 hineingeschoben. Anschließend wird der Stempel 72a der Hubvorrichtung 72 bis in seine untere Ausgangsposition abgesenkt, wobei er zuerst den ersten Stapel 61 auf den Haltebolzen der Haltevorrichtung 71 absetzt, bevor er alleine unter die Transportebene des unteren Horizontalförderers 69 abgesenkt wird. Anschließend transportiert der untere Horizontalförderer 69 die nächste auf ihrer Oberseite 53a mit Vorprodukt bereits beschickte Backplatteneinheit 53 unter das unteren Ende des ersten Stapels 61 und der nächste Stapelvorgang beginnt.

Bei jedem Stapelvorgang wird die auf der Oberseite 53a der zu integrierenden Backplatteneinheit 53 ausgebildete und bereits mit Vorprodukt beschickte, untere Formhälfte mit ihren nach oben weisenden Dichtleisten von unten auf die nach unten weisenden Dichtleisten der auf der Unterseite 53b der untersten Backplatteneinheit 53 des ersten Stapels 61 ausgebildeten oberen Formhälfte aufgesetzt und die beiden Formhälften werden zu einer geschlossenen Backform zusammengesetzt.

Mit jedem Stapelvorgang wird am unteren Ende des ersten Stapels 61 aus zwei Formhälften eine neue geschlossene Backform gebildet, deren Formhohlraum nach oben und unten durch die einander zugewandten Backflächen der beiden untersten Backplatteneinheiten 53 des ersten Stapels 61 und seitlich durch die aufeinanderliegenden Dichtleisten dieser beiden Backplatteneinheiten begrenzt ist. Dieser Formhohlraum ist bis auf die in den einander horizontal gegenüberliegenden Dichtleisten ausgebildeten Dampfschlitze vollständig geschlossen. Die mit dem Stapelvorgang beim Schließen der Backform in deren Formhohlraum eingeschlossene, formlose Masse wird zu einem als ebenes Blatt ausgebildeten dünnwandigen Formkörper gebacken, während der Formhohlraum zusammen mit den beiden ihn begrenzenden Backplatteneinheiten 53 im ersten Stapel 61 schrittweise nach oben durch den Backschacht 57 wandert. Während dieses Backprozesses wird die formlose Masse durch die in ihr entstehenden Backgase aufgeschäumt und im Formhohlraum verteilt, bevor die Backgase den Formhohlraum durch die Dampfschlitze verlassen und aus der geschlossenen Backform in den Backschacht 57 strömen. Dem beim Backprozeß im Formhohlraum entstehenden Innendruck, der in der Anfangphase des Backprozesses rasch ansteigt und nach kurzer Zeit wieder rasch abfällt, wirkt das Gewicht des jeweils über dem Formhohlraum liegenden Teiles des ersten Stapels 61 entgegen. Der Formhohlraum wandert im ersten Stapel 61 mit jedem weiteren Stapelvorgang um eine Etage nach oben und der über ihm liegende Teil des ersten Stapels 61 wird mit jeder an seinem oberen Ende vereinzelten Backplatteneinheit 53 kleiner und leichter. Während des gesamten Backprozesses ist der im Formhohlraum entstehende Innendruck stets deutlich kleiner, als der auf dem Formhohlraum von oben lastende Druck des Gewichtes des über ihm liegenden Teiles des ersten Stapels 61. Dies wird durch das hohe Gewicht des Stapels 61 erreicht, das durch das Gewicht der einzelnen Backplatteneinheiten 53 und die Anzahl der übereinandergestapelten Backplatteneinheiten 53 bestimmt wird.

Am oberen Ende des ersten Stapels 61 wird der Formhohlraum nur mehr durch das Gewicht der ihn nach oben begrenzenden Backplatteneinheit 53 geschlossen gehalten und mit dem Abheben dieser Backplatteneinheit 53 beim Auflösen des ersten Stapels 61 ebenfalls aufgelöst. Zum Vereinzeln der Backplatteneinheiten 53 am oberen Ende des ersten Stapels 61 wird der Greifer 74 des oberen Horizontalförderers 73 über das obere Ende des ersten Stapels 61 gefahren und abgewartet bis der erste Stapel 61 im Zuge eines Stapelvorganges von der unter ihm angeordneten Hubvorrichtung 72 bis in seine oberste Position angehoben ist. Dann erfaßt der Greifer 74 die oberste Backplatteneinheit 53 des ersten Stapels 61 und hält sie fest, während der erste Stapel 61 durch die Hubvorrichtung 72 wieder abgesenkt wird und die bisher zweitoberste und nunmehr oberste Backplatteneinheit 53 von der vom Greifer 74 gehaltenen Backplatteneinheit 53 nach unten entfernt wird. Dadurch wird die vorher von den beiden obersten Backplatteneinheiten 53 des ersten Stapels 61 gebildete Backform aufgelöst, wobei der gebackene Formkörper auf der Oberseite der nunmehr obersten Backplatteneinheit 53 des ersten Stapels 61 liegen bleibt und von dort abgenommen wird, während der Greifer 74 die abgenommene Backplatteneinheit 53 zum oberen Ende des zweiten Stapels 62 transportiert. Der Greifer 74 des oberen Horizontalförderers 73 wird wieder über das obere Ende des ersten Stapels 61 gefahren, bevor dieser im Zuge seines nächsten Stapelvorganges von seiner Hubvorrichtung 72 neuerlich bis in seine oberste Position angehoben wird und bei ihm der nächste Vereinzelungsvorgang beginnt.

Bei einer beschränkten Bauhöhe für den Backofen kann die für den jeweiligen Stapel zur Verfügung stehende Höhe zu klein sein, um in der vertikal nach oben führenden Transportstrecke stets das Gewicht des auf einer Backform lastenden Teiles des Stapels jeweils größer zu halten, als den auf die Formhälften der Backform während des Backprozesses wirkenden Innendruck.

Um bei einem solchen Backofen mit verkürzter Stapelhöhe das Eigengewicht der stapelbaren Backplatteneinheiten niedrig halten zu können, ist dem unteren Ende des verkürzten Stapels eine Betätigungsvorrichtung zugeordnet, die bei jedem Stapelvorgang die der neuen Backplatteneinheit und der untersten Backplatteneinheit des Stapels gemeinsamen Verriegelungsvorrichtungen bzw. Klemmvorrichtungen verriegelt bzw. festzieht.

Bei einem verkürzten Stapel läuft der Stapelvorgang etwas anders ab, als bei einem Stapel mit ausreichender Höhe. Die auf ihrer Oberseite mit Vorprodukt beschickte, neue Backplatteneinheit wird vom unteren Horizontalförderer unter das untere Ende des verkürzten Stapels transportiert. Die unter dem verkürzten Stapel angeordnete Hubvorrichtung hebt mit ihrem Hubstempel die neue Backplatteneinheit vom unteren Horizontalförderer ab und drückt sie von unten gegen die Unterseite des Stapels, der an seiner untersten Backplatteneinheit durch die ihm zugeordnete Haltevorrichtung festgehalten wird. Sobald die neue Backplatteneinheit mit ihrer Oberseite an der Unterseite der untersten Backplatteneinheit des Stapels anliegt, werden die den beiden Backplatteneinheiten gemeinsamen Verriegelungsvorrichtungen bzw. Klemmvorrichtungen durch die Betätigungsvorrichtung verriegelt bzw. festgezogen und dadurch die neue Backplatteneinheit in den Stapel als dessen neue unterste Backplatteneinheit integriert. Anschließend wird die Haltevorrichtung des Stapels von seiner bisherigen untersten Backplatteneinheit gelöst, der Stapel durch die Hubvorrichtung mit seiner neuen untersten Backplatteneinheit bis zur Haltevorrichtung angehoben und die Haltevorrichtung mit der neuen untersten Backplatteneinheit des Stapels in Eingriff gebracht und dieser bis zum nächsten Stapelvorgang festgehalten.

Der, die im Backofen 48 vertikal nach unten führende Transportstrecke 50 bildende zweite Stapel 62 besteht aus aufeinanderliegenden Backplatteneinheiten 53, die an seinem oberen Ende durch aufeinanderfolgende Stapelvorgänge der oberen Stapelvorrichtung 76 nacheinander in den zweiten Stapel 62 integriert und nach dem Durchwandern des zweiten Stapels 62 und des Backschachtes 57 am unteren Ende des zweiten Stapels 62 durch die untere Vereinzelungsvorrichtung 77 nacheinander vom zweiten Stapel 62 wieder entfernt werden.

Bei jedem Stapelvorgang wird eine, vom ersten Stapel 61 abgenommene Backplatteneinheit 53 als neue Backplatteneinheit 53 in den zweiten Stapel 62 von oben integriert. Der Greifer 74 des oberen Horizontalförderers 73 setzt die neue Backplatteneinheit 53 mit ihrer Unterseite 53b auf die mit Vorprodukt beschickte Oberseite 53a der obersten Backplatteneinheit 53 des zweiten Stapels 62 auf. Dabei wird die auf der Unterseite 53b der zu integrierenden Backplatteneinheit 53 ausgebildete oberen Formhälfte mit ihren nach unten weisenden Dichtleisten von oben auf die nach oben weisenden Dichtleisten der auf der Oberseite 53a der obersten Backplatteneinheit 53 des zweiten Stapels 62 ausgebildeten und bereits mit Vorprodukt beschickten, unteren Formhälfte aufgesetzt. Sobald die beiden Backplatteneinheiten 53 mit ihren einander zugewandten Dichtleisten bzw. Stapelflächen 51, 52 aufeinanderliegen werden die den beiden Backplatteneinheiten 53 gemeinsamen Verriegelungsvorrichtungen 54 bzw. Klemmvorrichtungen 83 verriegelt bzw. festgezogen. Dadurch werden die beiden eine geschlossene Backform bildenden Backplatteneinheiten 53 starr miteinander verbunden und die neue Backplatteneinheit 53 in den zweiten Stapel 62 integriert.

Die durch den Stapelvorgang entstandene geschlossene Backform, besitzt einen Formhohlraum, der bis auf die in den einander horizontal gegenüberliegenden Dichtleisten ausgebildeten Dampfschlitze vollständig geschlossen ist und durch die verriegelten Verriegelungsvorrichtungen 54 bzw. durch die festgezogenen Klemmvorrichtungen 83 entgegen dem während des Backprozesses in ihm entstehenden Innendruck geschlossen gehalten wird. Diese Backform wandert zusammen mit den beiden sie bildenden Backplatteneinheiten 53 und den diese starr miteinander verbindenden Verriegelungsvorrichtungen 54 bzw. Klemmvorrichtungen 83 mit jedem weiteren Stapelvorgang im zweiten Stapel 62 jeweils um eine Etage nach unten und damit schrittweise durch den Backschacht 57. Beim Passieren des Backschachtes 57 wird die mit dem Stapelvorgang beim Schließen der Backform in deren Formhohlraum eingeschlossene, formlose Masse zu einem als ebenes Blatt ausgebildeten, dünnwandigen Formkörper gebacken. Während dieses Backprozesses wird die formlose Masse durch die in ihr entstehenden Backgase aufgeschäumt und im Formhohlraum verteilt, bevor die Backgase den Formhohlraum durch die Dampfschlitze verlassen und aus der geschlossenen Backform in den Backschacht 57 strömen. Bevor die Backform die unterste Position im zweiten Stapel 62 erreicht und die beiden ihren Formhohlraum begrenzenden Backplatteneinheiten 53 die vorletzte und letzte Backplatteneinheit des zweiten Stapels 61 bilden, werden die Verriegelungsvorrichtungen 54 bzw. Klemmvorrichtungen 83 gelöst. Beim Auflösen des zweiten Stapels 62 durch die untere Vereinzelungsvorrichtung 77 wird die letzte Backplatteneinheit 53 des zweiten Stapels 62 von seiner vorletzten Backplatteneinheit 53 gelöst und unter Auflösung der Backform von der vorletzten Backplatteneinheit 53 weg nach unten abgesenkt. Der in dieser Backform hergestellte dünnwandige Formkörper bleibt auf der Oberseite 53a der abgesenkten Backplatteneinheit 53 liegen.

Beim Auflösen des zweiten Stapels 62 wird dieser vom Stempel 79a der unter ihm angeordneten Hubvorrichtung 79 an der Unterseite seiner letzten Backplatteneinheit 53 erfaßt und von den seitlichen Haltebolzen der ihm zugeordneten Haltevorrichtung 78 abgehoben. Die Haltebolzen werden durch das horizontale Auseinanderfahren der sie tragenden Schlitten aus der letzten Backplatteneinheit 53 des zweiten Stapels 62 herausgezogen. Anschließend wird der zweite Stapel 62 durch die Hubvorrichtung 79 abgesenkt bis die seitlichen Halteöffnungen seiner vorletzten Backplatteneinheit 53 auf die horizontalen Haltebolzen der Haltevorrichtung 78 ausgerichtet sind. Jetzt werden die beiden Schlitten der Haltevorrichtung 78 zusammengeschoben und die Haltebolzen in die Halteöffnungen der vorletzten Backplatteneinheit 53 des zweiten Stapels 62 hineingeschoben. Anschließend wird der Stempel 79a der Hubvorrichtung 79 bis in seine untere Ausgangsposition abgesenkt. Dabei wird zuerst der zweite Stapel 62 mit seiner vorletzten Backplatteneinheit 53 auf den Haltebolzen der Haltevorrichtung 78 abgesetzt und dann seine bisher letzte Backplatteneinheit 53 von seiner vorletzten Backplatteneinheit 53 getrennt und die abgetrennte, vormals letzte Backplatteneinheit 53 durch den Stempel 79a der Hubvorrichtung 79 weiter abgesenkt und samt dem auf ihrer Oberseite 53a liegenden gebackenen Formkörper auf dem unteren Horizontalförderer 69 absetzt. Der gebackene Formkörper wird in der unteren Entnahmestation 60 des Backofens 48 von dieser Backplatteneinheit 53 abgenommen und über die untere Ausgabestation 80 aus dem Backofen 48 ausgegeben. Die von zweiten Stapel 62 entfernte Backplatteneinheit 53 wird vom unteren Horizontalförderer 69 zuerst zur unteren Beschickungsstation 56 des Backofens 48, in der sie neuerlich mit Vorprodukt beschickt wird, und dann zum unteren Ende des ersten Stapels 61 transportiert.

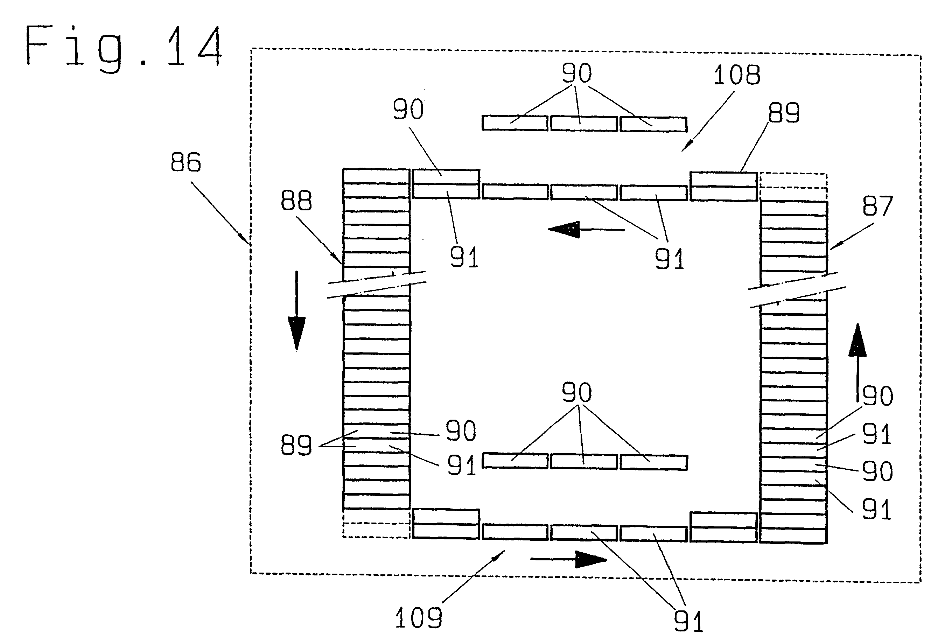

Fig. 14 zeigt einen Backofen 86 mit zwei gegenläufigen, vertikalen Transportstrecken 87, 88 zur Herstellung von dünnwandigen Formkörpern, die von sich ständig erneuernden Stapeln aus lose übereinanderliegenden, geschlossenen Backformeinheiten 89 gebildet werden.

Zur Bildung der auf- und zumachbaren Backformen sind jeweils nur einseitig verwendbare, stapelbare Backplatten 90, 91 vorgesehen, die an ihren Vorderseiten 90a bzw. 91a jeweils als obere bzw. untere Formhälften ausgebildet sind und an ihren Rückseiten 90b bzw. 91b mit Versteifungsrippen 92, 93 versehen sind, zwischen denen Heizkanäle 94, 95 ausgebildet sind.

Bei Backplatten für bei mit Gas beheizte Backöfen werden diese Heizkanäle im Backschacht von heißen Heizgasen durchströmt. Bei Backplatten für elektrisch beheizte Backöfen sind elektrische Heizelemente in den Heizkanälen angeordnet.

Die Backplatten 90, 91 besitzen an ihren Vorderseiten 90a, 91a und an ihren Rückseiten 90b, 91b einander jeweils gegenseitig zugeordnete Stapelflächen 96a, 96b, 97a, 97b, mit denen sie Vorderseite 90a an Vorderseite 91a und Rückseite 90b an Rückseite 91b übereinandergestapelt werden können. Die stapelbaren Backplatten 90,91 werden zur Bildung einer geschlossenen Backform paarweise mit ihren Vorderseite 90a,91a aufeinander gelegt und jeweils an einander entgegengesetzten Stirnseiten der Backform durch an ihnen angebrachte Verriegelungsvorrichtungen 98 oder durch von außen auf sie aufgesetzte selbsthemmende Klemmvorrichtungen 99 zu einer geschlossenen Backformeinheit starr miteinander verbunden, die als starrer Körper durch die jeweilige vertikale Transportstrecke 87, 88 transportiert wird.

Die aus den jeweils nur einseitig verwendbaren, stapelbaren Backplatten 90, 91 gebildeten Backformen sind jeweils auf die Herstellung eines bestimmten dünnwandigen Formkörpers abgestellt. Jede Backform besteht aus einer oberen Backplatte 90, deren Vorderseite 90a als obere Formhälfte der Backform ausgebildet ist, und aus einer unteren Backplatte 91, deren Vorderseite 91 a als untere Formhälfte der Backform ausgebildet ist.

Backformen für die Herstellung von rechteckigen ebenen Blättern werden aus stapelbaren Backplatten gebildet, die einen im wesentlichen rechteckigen Plattenkörper besitzen, an dessen Vorderseite eine im wesentlichen ebene, rechteckige Backfläche ausgebildet ist, die von seitlichen Dichtleisten begrenzt wird, in die die Stapelflächen der Vorderseite der Backplatte integriert sind. Zwei mit ihren Vorderseiten aufeinanderliegende Backplatten liegen mit den Dichtleisten ihrer einander zugewandten Backformhälften aufeinander und bilden eine geschlossene Backform, die bis auf die in einer der Dichtleisten angeordneten Dampfkanäle vollständig geschlossen ist.

Backformen für die Herstellung von runden, dreieckigen, fünfeckigen, oder fächerförmigen, ebenen Blättern können aus stapelbaren Backplatten gebildet werden, die einen im wesentlichen rechteckigen Plattenkörper besitzen, der an seiner Vorderseite eine runde, dreieckige, fünfeckige, oder fächerförmige Backfläche trägt, die von seitlichen Dichtleisten begrenzt ist, in die die Stapelflächen der Vorderseite integriert sind.

Backformen für die Herstellung von runden, dreieckigen, fünfeckigen, oder fächerförmigen, ebenen Blättern können aus stapelbaren Backplatten gebildet werden, die jeweils einen, der Form der herzustellenden Blätter entsprechenden, quaderförmigen Plattenkörper mit rundem, dreieckigem, fünfeckigem, oder fächerförmigem Grundriß besitzen.

Backformen für die Herstellung von dünnwandigen Formkörpern, die als rechteckige, seichte, nach oben offene Tassen ausgebildet sind, werden aus stapelbaren Backplatten mit im wesentlichen rechteckigem Plattenkörper gebildet. Die oberen Backplatten besitzen an ihren Vorderseiten jeweils eine Backfläche, die mit der der Gestalt der Tasse entsprechenden Erhebung versehen ist und von seitlichen Dichtleisten begrenzt wird, die dem Umriß der Tasse entsprechen und die Stapelflächen der Vorderseite der oberen Backplatten enthalten. Die unteren Backplatten besitzen an ihren Vorderseiten jeweils eine Backfläche, die mit der der Gestalt der Tasse entsprechenden Vertiefung versehen ist und von seitlichen Dichtleisten begrenzt wird, die dem Umriß der Tasse entsprechen und die Stapelflächen der Vorderseite der unteren Backplatten enthalten.

Backformen für die Herstellung von dünnwandigen Formkörpern, die als ebene Blätter ohne genau definierte Ränder ausgebildet sind, werden von stapelbaren Backplatten gebildet, die einen quaderförmigen Plattenkörper besitzen, der an seiner Vorderseite eine, der jeweiligen Umrißform der herzustellenden ebenen Blätter entsprechende, ebene Backfläche besitzt und außerhalb dieser die Wandstärke der Formkörper bestimmende Abstandshalter trägt, in die Stapelflächen der Vorderseite integriert sind.

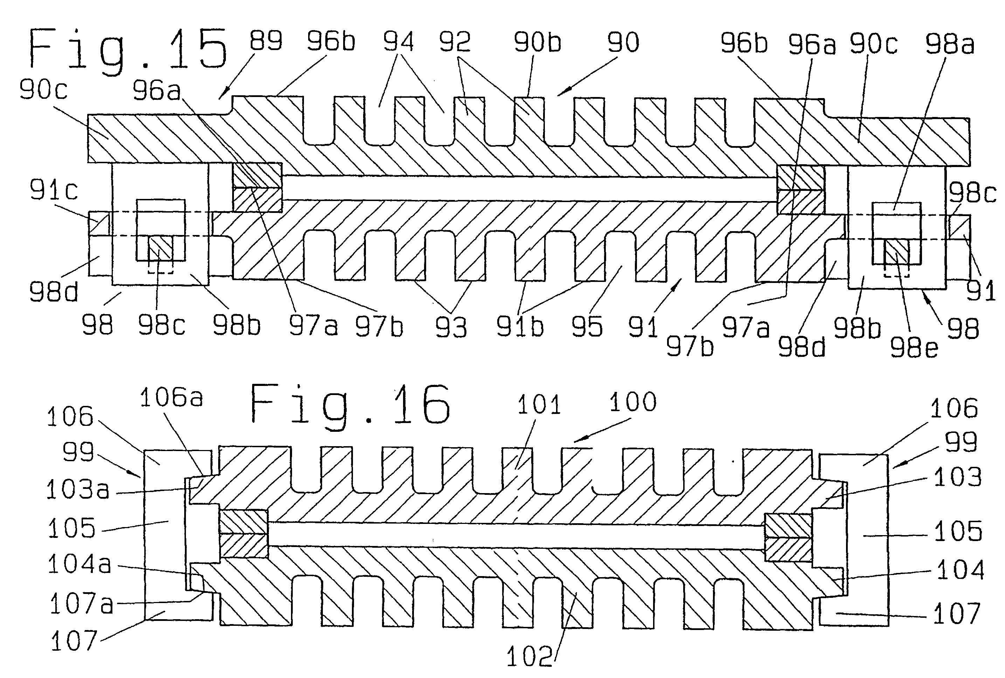

Fig. 15 zeigt eine stapelbare, aus zwei stapelbaren Backplatten 90, 91 gebildete, geschlossene Backformeinheit 89 mit seitlich starr miteinander verbundenen Backplatten 90, 91. Die Backplatten 90, 91 sind an zwei zueinander entgegengesetzten Stirnseiten der Backformeinheit jeweils mit im Abstand voneinander angeordneten Verriegelungsvorrichtungen 98 versehen, deren Oberteile an einem Verriegelungsabschnitt 90c der oberen Backplatte 90 und deren Unterteile an einem Verriegelungsabschnitt 91c der unteren Backplatte 91 ausgebildet sind. Bei jeder Verriegelungsvorrichtung ist der Oberteil als eine mit einem horizontalen Loch 98a versehene rechteckige Öse 98b ausgebildet, die von der Unterseite des Verriegelungsabschnittes 90c der oberen Backplatte 90 vertikal nach unten vorsteht. Der Unterteil umfaßt einen, nach oben offenen, vertikalen Aufnahmeschlitz 98c für die Öse 98b, der an der Oberseite des Verriegelungsabschnittes 91c der unteren Backplatte 91 ausgebildet ist, und einen im Inneren des Verriegelungsabschnittes 91c quer zur Öse 98b verlaufenden seitlich offenen Arbeitsschlitz 98d, in dem ein horizontal verschiebbarer Bolzen 98e mit keilförmiger Spitze 98f aufgenommen ist. Beim Übereinanderstapeln der beiden Backplatten 90, 91 wird jeweils die Öse 98b der oberen Backplatte 90 in den Aufnahmeschlitz 98c der unteren Backplatte 91 eingeschoben. Zum starren Verbinden der beiden Backplatten 90, 91 wird jeweils der Bolzen 98e der Verriegelungsvorrichtung 98 mit seiner keilförmigen Spitze 98f durch eine äußere (nicht dargestellte) Betätigungsvorrichtung in die Öse 98a eingeschoben, bis die obere Backplatte 90 an der unteren Backplatte 91 festgezogen ist und beide Backplatten 90, 91 eine geschlossene Backformeinheit 89 bilden, die als starrer Körper transportiert und übereinandergestapelt werden kann.

Fig. 16 zeigt eine weitere Ausführungsform einer geschlossenen Backformeinheit 100, die als starrer Körper transportiert und übereinandergestapelt werden kann. Die Backformeinheit 100 wird von zwei stapelbaren Backplatten 101, 102 gebildet, die im wesentlichen den Backplatten 90 und 91 der Fig. 15 entsprechen. Die stapelbaren Backplatten 101, 102 sind an entgegengesetzten Stirnseiten der Backformeinheit 100 durch selbsthemmende Klemmvorrichtungen 99 starr miteinander verbunden sind. Die Klemmvorrichtungen 99 bestehen jeweils aus zwei an der oberen bzw. unteren Backplatte 101, 102 angebrachten Klemmabschnitten 103, 104 und einer im wesentlichen C-förmigen Klammer 105, die mit ihren beiden jeweils als Klemmabschnitt ausgebildeten Enden 106, 107 in einem kraftschlüssigen und selbsthemmenden Reibungseingriff auf die beiden Klemmabschnitte 103, 104 der Backplatten 101, 102 aufgeschoben werden kann. Der Klemmabschnitt 103 der oberen Backplatte 101 trägt an seiner Oberseite eine obere Klemmfläche 103a und der Klemmabschnitt 104 der unteren Backplatte 102 trägt an seiner Unterseite eine untere Klemmfläche 104a. Die Klammer 105 trägt an ihren beiden Enden 106, 107 einander zugewandte Klemmftächen 106a, 107a. Beim Übereinanderstapeln der beiden Backplatten 101, 102 liegen die Verriegelungsabschnitte 103 der oberen Backplatte 101 über den Verriegelungsabschnitten 104 der unteren Backplatte 102. Zum starren Verbinden der beiden Backplatten 101, 102 wird die Klammer 105 mit ihren einander zugewandte Klemmflächen 106a, 107a auf die von einander abgewandten Klemmflächen 103a, 104a der Verriegelungsabschnitte 103, 104 der beiden Backplatten 101,102 aufgesetzt und diese Klemmflächen in einen kraftschlüssigen und selbsthemmenden Reibungseingriff gebracht. Die Klammer 105 wird mit ihren Klemmflächen 106a, 107a an den Klemmflächen 103a, 104a der beiden Backplatten 101, 102 entlang bewegt, bis zuerst das zum Aufschieben der Klammer 105 erforderliche Bewegungsspiel beseitigt ist und dann eine gewünschte Vorspannkraft durch die elastische Dehnung der Klammer 105 auf die beiden aufeinanderliegenden Backplatten 101, 102 aufgebracht ist und die beiden Backplatten 101, 102 eine geschlossene Backformeinheit 100 bilden, die als starrer Körper transportiert und übereinandergestapelt werden kann.

In dem Backofen der Fig. 14 werden die dünnwandigen Formkörper in den aus stapelbaren Backplatten 90, 91 bzw. 101, 102 gebildeten Backformeinheiten hergestellt, die einen in sich geschlossenen Kreislauf durchlaufen. Dieser Kreislauf besteht aus zwei im Abstand nebeneinander angeordneten, gegenläufigen, vertikalen Transportstrecken 87, 88 für die geschlossenen Backformeinheiten 98, 100 und zwei übereinander angeordneten, gegenläufigen, die vertikalen Transportstrecken 87, 88 jeweils miteinander verbindenden, horizontalen Transportstrecken 108, 109, in denen die Backformeinheiten jeweils von einer vertikalen Transportstrecke zur anderen transportiert werden und dabei in aufeinanderfolgend zu durchlaufenden Arbeitsstationen geöffnet, entleert, neuerlich beschickt und wieder geschlossen werden.

In der vertikal nach oben führenden Transportstrecke 87 durchlaufen die geschlossenen Backformeinheiten 98, 100 einen ersten Stapel, der aus lose aufeinanderliegenden geschlossenen Backformeinheiten 98, 100 besteht, die an seinem unteren Ende durch aufeinanderfolgende Stapelvorgänge einer unteren Stapelvorrichtung nacheinander in den ersten Stapel integriert und nach dem Durchwandern des ersten Stapels und des Backschachtes am oberen Ende des ersten Stapels durch eine obere Vereinzelungsvorrichtung nacheinander vom ersten Stapel wieder abgenommen werden.

In der vertikal nach unten führenden Transportstrecke 88 durchlaufen die geschlossenen Backformeinheiten 98, 100 einen zweiten Stapel, der ebenfalls aus lose aufeinanderliegenden geschlossenen Backformeinheiten besteht, die an seinem oberen Ende durch aufeinanderfolgende Stapelvorgänge einer oberen Stapelvorrichtung nacheinander in den zweiten Stapel integriert und nach dem Durchwandern des zweiten Stapels und des Backschachtes am unteren Ende des zweiten Stapels durch eine untere Vereinzelungsvorrichtung nacheinander vom zweiten Stapel wieder entfernt werden.

## Patentansprüche

1. Backofen für die Herstellung von dünnwandigen Formkörpern in auf- und zumachbaren Backformen, die mit ihren Formhälften die äußere Gestalt der in ihnen hergestellten Formkörper bestimmen, bei welchem Backofen die Formhälften von zumindest paarweise übereinanderstapelbaren Backplatten gebildet werden, die im Backofen in einem geschlossenen Kreislauf transportiert werden, der eine, einer unteren Beschickungsstation nachgeordnete, durch einen vertikalen Backschacht zu einer oberen Entnahmestation führende, vertikale Transportstrecke enthält, an deren unterem Ende die in der unteren Beschickungsstation mit Vorprodukt beschickten, die unteren Formhälften bildenden Backplatten zusammen mit den die oberen Formhälften bildenden Backplatten in einen aus zumindest paarweise aufeinanderliegenden Backplatten bestehenden, vertikalen Stapel integriert werden, der sich entlang der vertikalen Transportstrecke durch den Backschacht erstreckt und am oberen Ende der Transportstrecke in die einzelnen Backplatten aufgelöst wird, während die von den paarweise aufeinanderliegenden Backplatten gebildeten Backformen im Stapel schrittweise nach oben und durch den Backschacht wandern und die in den Backformen enthaltenen Vorprodukte zu dünnwandigen Formkörpern gebacken werden, die beim Auflösen des Stapels in der oberen Entnahmestation von den vereinzelten Backplatten abgenommen werden, **dadurch gekennzeichnet, daß** der von den Backplatten zu durchlaufende geschlossene Kreislauf eine zweite, einer oberen Beschickungsstation nachgeordnete, durch einen vertikalen Backschacht zu einer unteren Entnahmestation führende, vertikale Transportstrecke enthält, an deren oberem Ende die in der oberen Beschickungsstation mit Vorprodukt beschickten, die unteren Formhälften bildenden Backplatten zusammen mit den die oberen Formhälften bildenden Backplatten in einen aus zumindest paarweise aufeinanderliegenden und durch Verriegelungsvorrichtungen starr miteinander verbundenen Backplatten bestehenden, zweiten vertikalen Stapel integriert werden, der sich entlang der zweiten vertikalen Transportstrecke durch den Backschacht erstreckt und am unteren Ende der zweiten vertikalen Transportstrecke nach dem Lösen der Verriegelungsvorrichtungen in die einzelnen Backplatten aufgelöst wird, während die von den paarweise aufeinanderliegenden und durch Verriegelungsvorrichtungen starr miteinander verbundenen Backplatten gebildeten Backformen im zweiten Stapel schrittweise nach unten und durch den Backschacht wandern und die in den Backformen enthaltenen Vorprodukte zu dünnwandigen Formkörpern gebacken werden, die beim Auflösen des zweiten Stapels in der unteren Entnahmestation von den vereinzelten Backplatten abgenommen werden.

2. Backofen nach Anspruch 1, **dadurch gekennzeichnet, daß** bei der zweiten vertikalen Transportstrecke oberhalb des Backschachtes eine der oberen Beschickungsstation zugeordnete, obere Verriegelungsstation zum Verriegeln der neuerlich mit Vorprodukt beschickten, von paarweise aufeinanderliegenden Backplatte gebildeten Backformen vorgesehen ist.

3. Backofen nach Anspruch 1 oder 2, **dadurch gekennzeichnet, daß** daß oberhalb des Backschachtes eine den oberen Enden beider Transportstrecken zugeordnete Übergabevorrichtung für die von paarweise aufeinanderliegenden Backplatten gebildeten, verriegelten Backformen vorgesehen ist.

4. Backofen nach einem der Ansprüche 1 - 3, **dadurch gekennzeichnet, daß** für jede vertikale Transportstrecke ein eigener Backschacht vorgesehen ist.

5. Backofen nach einem der Ansprüche 1 - 4, **dadurch gekennzeichnet, daß** am unteren Ende der ersten vertikalen Transportstrecke eine, den ersten Stapel bildende erste Stapelvorrichtung und am unteren Ende der zweiten vertikalen Transportstrecke eine, den zweiten Stapel auflösende zweite Stapelvorrichtung vorgesehen ist.

6. Backofen nach Anspruch 5, **dadurch gekennzeichnet, daß** die an den unteren Enden der vertikalen Transportstrecken angeordneten Stapelvorrichtungen jeweils als die der betreffenden Transportstrecke zugeordneten Vertikalförderer ausgebildet sind.

7. Backofen nach einem der Ansprüche 1 - 6, **dadurch gekennzeichnet, daß** am oberen Ende der ersten Transportstrecke eine oberhalb des Backschachtes angeordnete, den ersten Stapel zugeordnete Vereinzelungsvorrichtung zum Auflösen des ersten Stapels vorgesehen ist.

8. Backofen nach einem der Ansprüche 1 - 7, **dadurch gekennzeichnet, daß** die Backplatten mit einander gegenseitig zugeordneten oberen bzw. unteren Stapelflächen versehen sind, mit denen sie innerhalb des jeweiligen Stapels aufeinanderliegen.

9. Backofen nach einem der Ansprüche 1 - 8, **dadurch gekennzeichnet, daß** an den Oberseiten der Backplatten jeweils mehrere, als untere Backformhälften ausgebildete Backformteile nebeneinander angeordnet sind und daß an den Unterseiten der Backplatten jeweils mehrere, als obere Backformhälften ausgebildete Backformteile nebeneinander angeordnet sind.

10. Backofen nach Anspruch 8 oder 9, **dadurch gekennzeichnet, daß** die den Oberseiten zugeordneten, oberen Stäpelflächen der Backplatten jeweils in die Dichtleisten der an den Oberseiten der Backplatten angeordneten, unteren Formhälften integriert sind und daß die den Unterseiten der Backplatten zugeordneten, unteren Stapelflächen jeweils in die Dichtleisten der an den Unterseiten der Backplatten angeordneten oberen Formhälften integriert sind, wobei die Backplatten innerhalb des jeweiligen Stapels mit den Dichtleisten ihrer Backformhälften aufeinanderliegen.

11. Backofen nach einem der Ansprüche 1 - 10, **dadurch gekennzeichnet, daß** jede Backplatte zum starren Verbinden zweier übereinandergestapelter Backplatten mit seitlichen Eingriffsflächen für von außen auf zwei übereinandergestapelte Backplatten aufzusetzende Verriegelungsvorrichtungen versehen ist.

12. Backofen nach einem der Ansprüche 1 - 11, **dadurch gekennzeichnet, daß** die Backplatten jeweils als an ihren Vorderseiten die oberen bzw. unteren Formhälften tragenden obere bzw. untere Backplatten ausgebildet sind, die an ihren Vorderseiten und an ihren Rückseiten einander gegenseitig zugeordnete Stapelflächen tragen, mit denen sie im übereinandergestapelten Zustand aufeinanderliegen, und daß zum starren Verbinden der paarweise mit ihren Vorderseiten übereinandergestapelten Backplatten mit beiden Backplatten starr verbindbare Verriegelungsvorrichtung vorgesehen sind.

13. Backofen nach Anspruch 12, **dadurch gekennzeichnet, daß** bei den oberen und unteren Backplatten die ihren Vorderseiten zugeordneten Stapelflächen jeweils in die Dichtleisten ihrer Formhälften integriert sind und die mit ihren Vorderseiten paarweise übereinandergestapelten Backplatten mit den Dichtleisten ihrer Formhälften aufeinanderliegen.

14. Backofen nach Anspruch 12 oder 13, **dadurch gekennzeichnet, daß** die oberen und unteren Backplatten mit seitlichen Eingriffsflächen für auf sie von außen aufzusetzende Verriegelungsvorrichtungen versehen sind.

15. Backofen nach einem der Ansprüche 1 - 11, **dadurch gekennzeichnet, daß** die oberen und unteren Formhälften von beidseitig verwendbaren, von innen beheizbaren Backplatteneinheiten gebildet werden, die mit ihren Oberseiten die unteren Formhälften bilden und mit ihren Unterseiten die oberen Formhälften bilden und in beiden Stapeln lückenlos aufeinanderliegen.

16. Backofen nach Anspruch 15, **dadurch gekennzeichnet, daß** die beidseitig verwendbaren Backplatteneinheiten innerhalb des, in der nach oben führenden, ersten vertikalen Transportstrecke angeordneten, ersten Stapels nur lose aufeinanderliegen und innerhalb des, in der nach unten führenden, zweiten vertikalen Transportstrecke angeordneten, zweiten Stapels paarweise durch Verriegelungsvorrichtungen starr miteinander verbunden sind, wobei innerhalb des ersten Stapels jede einzelne, von zwei aufeinanderliegenden Backplatteneinheiten gebildete Backform entgegen dem in ihr beim Backen entstehenden Innendruck nur durch das Gewicht des jeweils auf ihr lastenden Teiles des ersten Stapels geschlossen gehalten wird, während sie innerhalb des ersten Stapels schrittweise nach oben, durch den vertikalen Backschacht hindurch zur oberen Entnahmestation wandert.

## Claims

1. Baking oven for the production of thin-walled shaped products in openable and closable baking moulds, which with their mould halves determine the external shape of the shaped products produced therein, in which baking oven the mould halves are formed by baking trays stackable one above the other at least in pairs, the baking trays being transported in the baking oven in a closed loop, which, downstream of a lower charging station, comprises a vertical transport section leading through a vertical baking shaft to an upper removal station, at the lower end of which transport section the baking trays charged in the lower charging station with pre-product and forming the lower mould halves are integrated together with the baking trays forming the upper mould halves into a vertical stack consisting of baking trays lying one upon another at least in pairs, the stack extending along the vertical transport section through the baking shaft and being disassembled at the upper end of the transport section into the individual baking trays, whilst the baking moulds formed by the baking trays lying one upon another in pairs in the stack travel progressively upwards and through the baking shaft and the pre-products contained in the baking moulds are baked to form thin-walled shaped products that are removed from the separated baking trays on disassembly of the stack in the upper removal station, **characterised in that** the dosed loop to be traversed by the baking trays comprises a second vertical transport section downstream of an upper charging station and leading through a vertical baking shaft to a lower removal station, at the upper end of which second vertical transport section the baking trays forming the lower mould halves charged with pre-product in the upper charging station are integrated together with the baking trays forming the upper mould halves into a second vertical stack consisting of baking trays lying one upon another at least in pairs and connected rigidly with one another by means of locking devices, which second stack extends along the second vertical transport section through the baking shaft and is disassembled at the lower end of the second vertical transport section into the individual baking trays after release of the locking devices, whilst the baking moulds formed by the baking trays lying one upon another in pairs and rigidly connected with one another by locking devices in the second stack move progressively downwards and through the baking shaft and the pre-products contained in the baking moulds are baked to form thin-walled shaped products which are removed from the separated baking trays on disassembly of the second stack in the lower removal station.

2. Baking oven according to claim 1, **characterised in that** at the second vertical transport section above the baking shaft an upper locking station associated with the upper charging station is provided for locking the baking moulds formed by baking trays lying one upon another in pairs and freshly filled with pre-product.

3. Baking oven according to claim 1 or 2, **characterised in that** above the baking shaft a transfer device associated with the upper ends of the two transport sections is provided for the locked baking moulds formed by baking trays lying one upon another in pairs.

4. Baking oven according to any one of claims 1 to 3, **characterised in that** each vertical transport section is provided with its own baking shaft.

5. Baking oven according to any one of claims 1 to 4, **characterised in that** a first stacking device forming the first stack is provided at the lower end of the first vertical transport section and a second stacking device disassembling the second stack is provided at the lower end of the second vertical transport section.

6. Baking oven according to claim 5, **characterised in that** the stacking devices arranged at the lower end of the vertical transport sections are each in the form of a vertical conveyor associated with the relevant transport section.

7. Baking oven according to any one of claims 1 to 6, **characterised in that** for disassembling the first stack a separating device associated with the first stack and arranged above the baking shaft is provided at the upper end of the first transport section.

8. Baking oven according to any one of claims 1 to 7, **characterised in that** the baking trays are provided with mutually associated upper and lower stacking faces with which they lie one upon another within the respective stack.

9. Baking oven according to any one of claims 1 to 8, **characterised in that** on the upper sides of the baking trays there are arranged side by side several baking mould parts in the form of lower baking mould halves and **in that** on the undersides of the baking trays there are arranged side by side several baking mould parts in the form of upper baking mould halves.

10. Baking oven according to claim 8 or 9, **characterised in that** the upper stacking faces of the baking trays associated with the upper sides are each integrated into the sealing strips of the lower mould halves arranged on the upper sides of the baking trays, and **in that** the lower stacking faces associated with the undersides of the baking trays are each integrated in the sealing strips of the upper mould halves arranged on the undersides of the baking trays, the baking trays within the particular stack lying one upon another by means of the sealing strips of their baking mould halves.

11. Baking oven according to any one of claims 1 to 10, **characterised in that** for rigid connection of two baking trays stacked one above the other each baking tray is provided with lateral engagement faces for locking devices to be placed from the outside on two baking trays stacked one above the other.

12. Baking oven according to any one of claims 1 to 11, **characterised in that** the baking trays are each in the form of upper and lower baking trays supporting on their front sides the upper and lower mould halves respectively, which baking trays on their front sides and on their rear sides carry mutually associated stacking faces with which in the stacked state they lie one upon another, and **in that** for rigid connection of the baking trays stacked in pairs with their front sides one above the other, there are provided locking devices rigidly connectable with the two baking trays.

13. Baking oven according to claim 12, **characterised in that**, in the case of the upper and lower baking trays, the stacking faces associated with their front sides are each integrated in the sealing strips of their mould halves and the baking trays stacked with their front sides in pairs one above the other lie one upon another by means of the sealing strips of their mould halves.

14. Baking oven according to claim 12 or 13, **characterised in that** the upper and lower baking trays are provided with lateral engagement faces for locking devices to be placed from the outside thereon.

15. Baking oven according to any one of claims 1 to 11, **characterised in that** the upper and lower mould halves are formed by baking tray units heatable from the inside and useable on both sides, which baking tray units with their upper sides form the lower mould halves and with their undersides form the upper mould halves and lie one upon another in both stacks without discontinuities.

16. Baking oven according to claim 15, **characterised in that** within the first stack arranged in the upwardly leading, first vertical transport section the baking tray units useable on both sides lie only loosely one upon another, and within the second stack arranged in the downwardly leading, second vertical transport section are rigidly connected with one another in pairs by locking devices, wherein within the first stack each individual baking mould formed by two baking tray units lying one upon another is held closed against the internal pressure developing within it during baking only by the weight of the respective part of the first pile subjecting it to load, whilst it moves within the first stack progressively upwards through the vertical baking shaft to the upper removal station.

## Revendications

1. Four pour la fabrication de corps moulés à paroi mince dans des moules de cuisson ouvrants et fermants, qui déterminent par leurs demi-moules la configuration extérieure des corps moulés fabriqués à leur intérieur, four dans lequel les demi-moules sont constitués de plaques de cuisson empilables les unes sur les autres au moins par paires qui sont transportées dans le four en un circuit fermé qui comprend un trajet de transport vertical agencé derrière un poste de garnissage et conduisant par un puits de cuisson vertical à un poste de prélèvement, trajet de transport à l'extrémité inférieure duquel les plaques de cuisson constituant les demi-moules inférieurs, garnies d'avant-produit au poste de garnissage inférieur, sont intégrées, avec les plaques de cuisson constituant les demi-moules supérieurs, dans une pile verticale constituée de plaques de cuisson superposées au moins par paires qui s'étend le long du trajet de transport vertical à travers le puits de cuisson et qui est éclatée en les plaques de cuisson individuelles à l'extrémité supérieure du trajet de transport, tandis que les moules de cuisson constitués des plaques de cuisson superposées par paires montent en pile pas à pas à travers le puits de cuisson et que les avant-produits contenus dans les moules de cuisson donnent par cuisson des corps moulés à paroi mince qui sont prélevés des plaques de cuisson individualisées lors de l'éclatement de la pile au poste de prélèvement supérieur, **caractérisé en ce que** le circuit fermé à parcourir par les plaques de cuisson comprend un second trajet de transport vertical agencé derrière un poste de garnissage supérieur et conduisant à un poste de prélèvement inférieur à travers un puits de cuisson vertical, trajet de transport à l'extrémité supérieure duquel les plaques de cuisson constituant les demi-moules inférieurs, garnies d'avant-produit au poste de garnissage supérieur sont intégrées avec les plaques de cuisson constituant les demi-moules supérieurs, dans une seconde pile verticale constituée de plaques de cuisson reliées rigidement les unes aux autres par des dispositifs de verrouillage et superposées au moins par paires, pile verticale qui s'étend à travers le puits de cuisson le long du deuxième trajet de transport vertical et qui est éclatée en les plaques de cuisson individuelles à l'extrémité inférieure du deuxième trajet de transport vertical après libération des dispositifs de verrouillage, tandis que les moules de cuisson constitués des plaques de cuisson reliées rigidement entre elles par les dispositifs de verrouillage et superposées par paires descendent pas à pas dans la seconde pile à travers le puits de cuisson, et que les avant-produits contenus dans les moules de cuisson donnent par cuisson des corps moulés à paroi mince, qui lors de l'éclatement de la deuxième pile sont prélevés des plaques de cuisson individualisées au deuxième poste de prélèvement.

2. Four suivant la revendication 1, **caractérisé en ce que** dans le second trajet de transport vertical il est prévu au-dessus du puits de cuisson un poste de verrouillage supérieur associé au poste de garnissage supérieur pour verrouiller les moules de cuisson constitués de plaques de cuisson superposées par paires, nouvellement garnis d'avant-produit.

3. Four suivant la revendication 1 ou 2, **caractérisé en ce qu'**au-dessus du puits de cuisson, il est prévu un dispositif de transfert associé aux extrémités supérieures des deux trajets de transport pour les moules de cuisson verrouillés, constitués de plaques de cuisson superposées par paires.

4. Four suivant l'une des revendications 1 à 3, **caractérisé en ce qu'**il est prévu un puits de cuisson individuel pour chaque trajet de transport vertical.

5. Four suivant l'une des revendications 1 à 4, **caractérisé en ce qu'** à l'extrémité inférieure du premier trajet de transport vertical il est prévu un premier dispositif d'empilement constituant la première pile, et à l'extrémité inférieure du second trajet de transport vertical, il est prévu un second dispositif d'empilement éclatant la deuxième pile.

6. Four suivant la revendication 5, **caractérisé en ce que** les dispositifs d'empilement agencés aux extrémités inférieures des trajets de transport verticaux sont chacun constitués en tant que le transporteur vertical associé au trajet de transport concerné.

7. Four suivant l'une des revendications 1 à 6, **caractérisé en ce qu'**il est prévu à l'extrémité supérieure du premier trajet de transport un dispositif d'individualisation associé à la première pile, agencé au-dessus du puits de cuisson, pour éclater la première pile.

8. Four suivant l'une des revendications 1 à 7, **caractérisé en ce que** les plaques de cuisson sont munies de surfaces d'empilement supérieures et respectivement inférieures réciproquement associées, par lesquelles elles sont superposées à l'intérieur de chaque pile.

9. Four suivant l'une des revendications 1 à 8, **caractérisé en ce que** sur le côté supérieur de chaque plaque de cuisson sont agencées l'une à côté de l'autre plusieurs pièces de moule de cuisson constituées en tant que demi-moules de cuisson inférieurs, et **en ce que** sur le côté inférieur de chaque plaque de cuisson sont agencées l'une à coté de l'autre plusieurs pièces de moule de cuisson constituées en tant que demi-moules de cuisson supérieurs.

10. Four suivant la revendication 8 ou 9, **caractérisé en ce que** les surfaces d'empilement supérieures, associées aux cotés supérieurs des plaques de cuisson, sont intégrées chacune dans les bordures d'étanchéité des demi-moules inférieurs agencés sur les cotés supérieurs des plaques de cuisson, et **en ce que** les surfaces d'empilement inférieures, associées aux cotés inférieurs des plaques de cuisson, sont chacune intégrées dans les bordures d'étanchéité des demi-moules supérieurs agencés sur les cotés inférieurs des plaques de cuisson, et dans chaque pile les plaques de cuisson se superposent par les bordures d'étanchéité de leurs demi-moules de cuisson.

11. Four suivant l'une des revendications 1 à 10, **caractérisé en ce que** pour la liaison rigide de deux plaques de cuisson empilées, chaque plaque de cuisson est munie de surfaces de prise latérales pour des dispositifs de verrouillage à installer de l'extérieur sur deux plaques de cuisson empilées.

12. Four suivant l'une des revendications 1 à 11, **caractérisé en ce que** les plaques de cuisson sont chacune constituées en tant que plaques de cuisson supérieure et respectivement inférieure portant les demi-moules supérieurs et respectivement inférieurs sur leur coté avant, ces plaques de cuisson supérieures et respectivement inférieures portant sur leur coté avant et sur leur coté arrière des surfaces d'empilement réciproquement associées par lesquelles elles se superposent à l'état empilé, et **en ce qu'**il est prévu pour relier rigidement les plaques de cuisson empilées par paires par leur coté avant, des dispositifs de verrouillage pouvant être reliés rigidement avec les deux plaques de cuisson.

13. Four suivant la revendication 12, **caractérisé en ce que** sur les plaques de cuisson supérieures et inférieures les surfaces d'empilement associées à leurs cotés avant sont chacune intégrées dans les bordures d'étanchéité de leurs demi-moules, et les plaques de cuisson empilées par paires par leurs cotés avant se superposent par les bordures d'étanchéité de leurs demi-moules.

14. Four suivant la revendication 12 ou 13, **caractérisé en ce que** les plaques de cuisson supérieures et inférieures sont munies de surfaces de prise latérales pour des dispositifs de verrouillage à poser sur elles de l'extérieur.

15. Four suivant l'une des revendications 1 à 11, **caractérisé en ce que** les demi-moules supérieurs et inférieurs sont constitués d'unités formant plaques de cuisson pouvant être chauffées de l'intérieur et utilisables des deux côtés, qui constituent les demi-moules inférieurs par leurs cotés supérieurs et constituent les demi-moules supérieurs par leurs cotés inférieurs, et se superposent sans lacune dans les deux piles.

16. Four suivant la revendication 15, **caractérisé en ce que** les unités formant plaques de cuisson utilisables des deux cotés ne sont que librement superposées dans la première pile formée dans le premier trajet de transport vertical montant, et sont reliées rigidement ensemble par paires, par des dispositifs de verrouillage, dans la deuxième pile formée dans le deuxième trajet vertical descendant, et **en ce qu'**à l'intérieur de la première pile, chaque moule de cuisson constitué de deux unités superposées formant plaques de cuisson n'est maintenue fermé à l'encontre de la pression intérieure se formant à son intérieur lors de la cuisson, que par le poids de la partie de la première pile qui repose sur lui, alors que ce moule monte pas à pas dans la première pile à travers le puits de cuisson vertical vers le poste de prélèvement supérieur.
